# EUROPEAN PATENT APPLICATION

(11) **EP 3 011 822 A1**
(43) Date of publication of application: **27.04.2016**
(21) Application number: 13887294.0
(22) Date of filing: 08.11.2013
(51) Int. Cl.: A01D 34/64, A01D 34/69, A01D 34/78

(54) **ELECTRIC WORK VEHICLE**

(30) Priority: 19.06.2013 JP 2013128770; 19.06.2013 JP 2013128771
(71) Applicant: Yanmar Co., Ltd., Osaka-shi, Osaka 530-8311 (JP)
(72) Inventor: MATSUMOTO, Keiji, Osaka-shi, Osaka 530-8311 (JP); HAYASHI, Keiichi, Osaka-shi, Osaka 530-8311 (JP)
(74) Representative: Hering, Hartmut
(86) International application number: PCT/JP2013/080244
(87) International publication number: WO 2014/203422

(57) **Abstract**

An electric work vehicle 10 includes: a pair of right and left drive wheels 13; a pair of right and left traveling motors 16 configured to drive the respective drive wheels; and a first work unit MU including a first working portion 45 to execute main work and a first work motor 15 to drive the first working portion 45, wherein provided are: the second work unit SMU including a second working portion 62 to execute secondary work and a second work motor 61 to drive the second working portion 62; and a lateral moving unit capable of integrally moving the second working portion 62 and the second work motor 61 in a lateral direction of the electric work vehicle 10.

## Description

### Technical Field

The present invention relates to an electric work vehicle including: a pair of right and left drive wheels; a pair of right and left traveling motors configured to drive the respective drive wheels; and a first work unit including a first working portion to execute main work, and a first work motor to drive the first working portion.

### Background Art

In related arts, a lawn mower (work vehicle) mows a lawn (grass) by rotating, with engine power, two mower blades disposed rotatably in a substantially horizontal direction inside a mower deck. Further, the lawn mower has a configuration in which the mowed lawn is discharged rearward.

### Citation List

### Patent Literature

Patent Literature 1: JP 11-509798 A

### Summary of Invention

### Technical Problem

Recently, there is a social trend to control emission of exhaust gas containing greenhouse gas from the viewpoint of global environment issues. Response to such movement is particularly notable in automobile industry, and development for a so-called eco-car such as a hybrid car and an electric car is conducted. Especially, in recent years, technical development for a battery-powered electric car is accelerated.

However, this kind of technical development is not so active in the field of a work vehicle. Particularly, in the field of a lawn mower, a present situation is that the technical development for feasibility thereof is not sufficiently conducted. Therefore, developing an electric-powered lawn mower has an important implication.

Meanwhile, in the case of mowing a lawn in a relatively large garden or the like, there may be a demand to create a design such as an image and/or text with gradation formed based on differences in a lawn mowing height by considering the lawn as a canvas. In this case, lawn mowing work to mow the lawn at different heights is necessary. Further, in order to create the design in detail, complex travel along a contour of the design and the like are required. Therefore, there are problems in which the work takes a long time and is not efficient, and further is not easy. Accordingly, the present invention is directed to providing an electric work vehicle capable of efficiently and easily executing the work to create a design such as an image and/or text in detail by considering a work ground as a canvas.

### Solution to Problem

Therefore, the invention according to claim 1 lies in an electric work vehicle, including:
a pair of right and left drive wheels;
a pair of right and left traveling motors configured to drive the respective drive wheels; and
a first work unit including a first working portion to execute main work and a first work motor to drive the first working portion,
a second work unit including a second working portion to execute secondary work and a second work motor to drive the second working portion, and
a lateral moving unit being capable of integrally moving the second working portion and the second work motor in a lateral direction of the electric work vehicle.

In the electric work vehicle according to claim 1, the invention according to claim 2 includes a vertical moving unit capable of moving or rotating the second work unit in the vertical direction of the electric work vehicle.

In the electric work vehicle according to claim 1, the invention according to claim 3 includes the second work unit being detachably attached to the electric work vehicle.

In the electric work vehicle according to claim 1, the invention according to claim 4 includes the lateral moving unit includes: an endless body stretched in the lateral direction; a plurality of rotating bodies configured to wind the endless body; and a motor including an output shaft configured to fix one of the plurality of rotating bodies.

In the electric work vehicle according to claim 1, the invention according to claim 5 is the electric work vehicle using the first work unit to execute lawn mowing, wherein
the first working portion is a mower blade attached to the first work motor,
a mower deck configured to cover the mower blade is provided,
the second work unit is used for lawn mowing,
also the second working portion is a sub mower blade attached to the second work motor,
a sub mower deck configured to cover the sub mower blade is provided, and
the sub mower blade is smaller than the mower blade.

In the electric work vehicle according to claim 1, the invention according to claim 6 is capable of executing work by autonomous travel using a GPS satellite without an operator riding on the electric work vehicle.

The invention according to claim 7 lies in an electric work vehicle, including:
a pair of right and left drive wheels;
a pair of right and left traveling motors configured to drive the respective drive wheels; and
a first work unit including a first working portion to execute main work and a first work motor to drive the first working portion, wherein
a second work unit includes a plurality of second working portions to execute secondary work and a plurality of second work motors to respectively drive the plurality of second working portions, and
the second working portions are disposed aligned in a lateral direction of the electric work vehicle.

In the electric work vehicle according to claim 7, the invention according to claim 8 includes the plurality of second working portions being disposed adjacent to one another.

In the electric work vehicle according to claim 7, the invention according to claim 9 includes a vertical moving unit capable of respectively moving the plurality of second working portions in the vertical direction of the electric work vehicle.

In the electric work vehicle according to claim 7, the invention according to claim 10 includes the second work unit being detachably attached to the electric work vehicle.

In the electric work vehicle according to claim 7, the invention according to claim 11 is the electric work vehicle configured to use the first work unit to execute lawn mowing, wherein
the first working portion is a mower blade attached to the first work motor,
a mower deck configured to cover the mower blade is provided,
the second work unit is used for lawn mowing,
also the second working portion is a sub mower blade attached to the second work motor,
a sub mower deck configured to cover the sub mower blade is provided, and
the sub mower blade is smaller than the mower blade.

In the electric work vehicle according to claim 7, the invention according to claim 12 is capable of executing work by autonomous travel using a GPS satellite without an operator riding on the electric work vehicle.

### Advantageous Effects of Invention

According to the invention recited in claim 1, the electric work vehicle includes: the pair of right and left drive wheels; the pair of right and left traveling motors configured to drive the respective drive wheels; and the first work unit including the first working portion to execute main work, and a first work motor to drive the first working portion, wherein provided are: the second work unit including a second working portion to execute secondary work, and the second work motor to drive the second working portion; and the lateral moving unit capable of integrally moving the second working portion and the second work motor in the lateral direction of the electric work vehicle.

Therefore, the electric work vehicle capable of efficiently and easily executing work to create a design such as an image and/or text in detail can be provided by considering a work ground as a canvas. Here, the main work by the first work unit and the secondary work by the second work unit can be simultaneously executed, thereby achieving to shorten working hours and improving work efficiency. Further, since the second working portion and the second work motor can be integrally moved in the lateral direction of the electric work vehicle, a work area of the secondary work by the second work unit can be easily formed complex by combining relatively simple travel of the electric work vehicle with the lateral movement thereof. For example, in the case where the electric work vehicle is applied to an electric mower, a lawn is mowed by the first work unit at a certain mowing height (main work), and further work is executed by the second work unit to mow the lawn at a height shorter than the mowing height by the first work unit (secondary work). By performing the above main work and secondary work, the design such as an image and/or text can be efficiently and easily created in detail with the gradation formed based on differences in the lawn mowing height by considering the lawn as a canvas.

According to the invention recited in claim 2, the vertical moving unit capable of moving or rotating the second work unit in the vertical direction of the electric work vehicle is provided. Therefore, the work area of the secondary work by the second work unit can be formed complex. Further, the design such as an image and/or text can be efficiently and easily created in detail by considering the work ground as a canvas.

According to the invention recited in claim 3, the second work unit is detachably attached to the electric work vehicle. Therefore, in the case of executing only the main work, a vehicle weight is reduced, thereby achieving to execute the main work efficiently. Further, maintenance for the second work unit can be easily performed. Moreover, at the time of housing the electric work vehicle, the electric work vehicle and the second work unit can be stored separately, thereby saving a housing space. Also, the electric work vehicle and the second work unit can be housed regardless of a jointed size thereof.

According to the invention recited in claim 4, the lateral moving unit includes: the endless body stretched in the lateral direction; the plurality of rotating bodies configured to wind the endless body; and the motor including the output shaft configured to fix any one of the plurality of rotating bodies. Therefore, the second working portion and the second work motor can be integrally moved in the lateral direction of the electric work vehicle with a simple structure. Further, maintainability for the second work unit is improved. Moreover, manufacturing cost for the second work unit can be reduced.

According to the invention recited in claim 5, the electric work vehicle uses the first work unit to execute lawn mowing, wherein the first working portion is the mower blade attached to the first work motor, the mower deck configured to cover the mower blade is provided, the second work unit is used for lawn mowing, further the second working portion is the sub mower blade attached to the second work motor, the sub mower deck configured to cover the sub mower blade is provided, and the sub mower blade is smaller than the mower blade.

Therefore, lawn mowing is performed such that the lawn mowing height by the second work unit becomes shorter than the lawn mowing height by the first work unit, thereby achieving to efficiently and easily create the design such as an image and/or text in detail with the gradation formed based on the differences in the lawn mowing height by considering the lawn as a canvas.

According to the invention recited in claim 6, the work can be executed by autonomous travel using the GPS satellite without the operator riding on the vehicle. Therefore, the work to create a detailed design such as an image and/or text with the gradation formed based on the differences in the lawn mowing height by considering the lawn as a canvas can be executed in an unmanned state by an autonomous travel system using the GPS satellite. Further, no operator is needed to ride on the vehicle, and workforce can be saved. Moreover, the detailed design can be created regardless of operating skills of the operator. Additionally, in controlling the work by the autonomous travel, an autonomous travel route is formed simple, and further the autonomous travel and control for the first work unit and second work unit can be executed based on a relatively simple work pattern.

According to the invention recited in claim 7, the electric work vehicle includes: the pair of right and left drive wheels; the pair of right and left traveling motors configured to drive the respective drive wheels; and the first work unit including the first working portion to execute the main work and the first work motor to drive the first working portion, wherein the second work unit including the plurality of second working portions to execute the secondary work, and the plurality of second work motors to respectively drive the plurality of second working portions is provided, and the second working portions are disposed aligned in the lateral direction of the electric work vehicle.

Therefore, the electric work vehicle capable of efficiently and easily executing work to create the design such as an image and/or text in detail by considering a work ground as a canvas can be provided. Here, the main work by the first work unit and the secondary work by the second work unit can be simultaneously executed, thereby achieving to shorten the working hours and improving work efficiency. Further, since the plurality of second working portions disposed aligned in the lateral direction of the electric work vehicle is provided, the work area of the secondary work by the second work unit can be easily formed complex by combining the relatively simple travel of the electric work vehicle with operation of the plurality of second working portions. For example, in the case where the electric work vehicle is applied to the electric mower, the lawn is mowed by the first work unit at a certain mowing height (main work), and further work is executed by the second work unit to mow the lawn at a height shorter than the lawn mowing height by the first work unit (secondary work). By performing the above main work and secondary work, the design such as an image and/or text can be efficiently and easily created in detail with the gradation formed based on differences in the lawn mowing height by considering the lawn as a canvas.

According to the invention recited in claim 8, the plurality of second working portions is disposed adjacent to one another. Therefore, the work area of the secondary work by the second work unit can be formed more complex. Further, the design such as an image and/or text can be efficiently and easily created in detail by considering the work ground as a canvas.

According to the invention recited in claim 9, the vertical moving unit capable of respectively moving the plurality of second working portions in the vertical direction of the electric work vehicle is provided. Therefore, the work area executed by the secondary work by the second work unit can be formed more complex. Further, the work to create the design such as an image and/or text in detail can be efficiently and easily executed by considering the work ground as a canvas.

According to the invention recited in claim 10, the second work unit is detachably attached to the electric work vehicle. Therefore, in the case of executing only the main work, the vehicle weight is reduced, thereby achieving to efficiently execute the main work. Further, maintenance for the second work unit can be easily performed. Moreover, at the time of housing the electric work vehicle, the electric work vehicle and the second work unit can be stored separately, thereby saving the housing space. Also, the electric work vehicle and the second work unit can be housed regardless of the jointed size thereof.

According to the invention recited in claim 11, the electric work vehicle is configured to use the first work unit to execute lawn mowing, wherein the first working portion is the mower blade attached to the first work motor, the mower deck configured to cover the mower blade is provided, the second work unit is used for lawn mowing, further the second working portion is the sub mower blade attached to the second work motor, the sub mower deck configured to cover the sub mower blade is provided, and the sub mower blade is smaller than the mower blade.

Therefore, lawn mowing is performed such that the lawn mowing height by the second work unit becomes shorter than the lawn mowing height by the first work unit, thereby achieving to efficiently and easily create the design such as an image and/or text in detail with the gradation formed based on the differences in the lawn mowing height by considering the lawn as a canvas.

According to the invention recited in claim 12, the work can be executed by the autonomous travel using the GPS satellite without the operator riding on the vehicle. Therefore, the work to create the detailed design such as an image and/or text with the gradation formed based on the differences in the lawn mowing height by considering the lawn as a canvas can be executed in an unmanned state by the autonomous travel system using the GPS satellite. Further, no operator is needed to ride on the vehicle, and workforce can be saved. Moreover, the detailed design can be created regardless of operating skills of the operator. Additionally, in controlling the work by the autonomous travel, the autonomous travel route is formed simple, and further the autonomous travel and control for the first work unit and second work unit can be executed based on a relatively simple work pattern.

### Brief Description of Drawings

Fig. 1 is a plan view illustrating an electric lawn mower connected with a sub mower deck unit on a rear side thereof according to an exemplary electric work vehicle of the present invention.
Fig. 2 is a side view illustrating the electric lawn mower connected with the sub mower deck unit on the rear side.
Fig. 3 is a schematic side view illustrating a vicinity of a connecting portion of the sub mower deck unit.
Fig. 4 is a perspective view illustrating a chassis constituting the electric lawn mower.
Figs. 5A and 5B are views for describing a configuration of the mower deck unit: Fig. 5A is a bottom view illustrating the mower deck unit, and Fig. 5B is a rear view from the direction of an arrow A in Fig. 5A.
Fig. 6 is a perspective view illustrating the sub mower deck unit.
Fig. 7 is a plan view for describing a configuration of the sub mower deck unit.
Fig. 8 is a cross-sectional view taken along an arrow B in Fig. 7.
Fig. 9 is a diagram for describing an autonomous travel system of the electric lawn mower using a GPS satellite.
Fig. 10 is a diagram for describing an exemplary autonomous travel route of the electric lawn mower.
Fig. 11 is a diagram for describing an exemplary operation of the sub mower deck unit when the electric lawn mower autonomously travels.
Fig. 12 is a diagram for describing an exemplary lawn mowing area by the sub mower deck unit when the electric lawn mower autonomously travels.
Fig. 13 is a diagram for describing a different example of the lawn mowing area by the sub mower deck unit when the electric lawn mower autonomously travels.
Fig. 14 is a diagram for describing another different example of the lawn mowing area by the sub mower deck unit when the electric lawn mower autonomously travels.
Fig. 15 is a plan view for describing a configuration of a different sub mower deck unit according to the present invention.
Fig. 16 is a perspective view illustrating the different sub mower deck unit according to the present invention.
Fig. 17 is a plan view for describing a configuration of the sub mower deck unit in Fig. 16.
Figs. 18A and 18B are cross-sectional views taken along an arrow B in Fig. 17.
Fig. 19 is a diagram for describing the autonomous travel system of the electric lawn mower using the GPS satellite.
Fig. 20 is a diagram for describing an exemplary operation of the sub mower deck unit when the electric lawn mower autonomously travels.
Fig. 21 is a diagram for describing an exemplary lawn mowing area by the sub mower deck unit when the electric lawn mower autonomously travels.
Fig. 22 is a diagram for describing a different example of the lawn mowing area by the sub mower deck unit when the electric lawn mower autonomously travels.

### Description of Embodiments

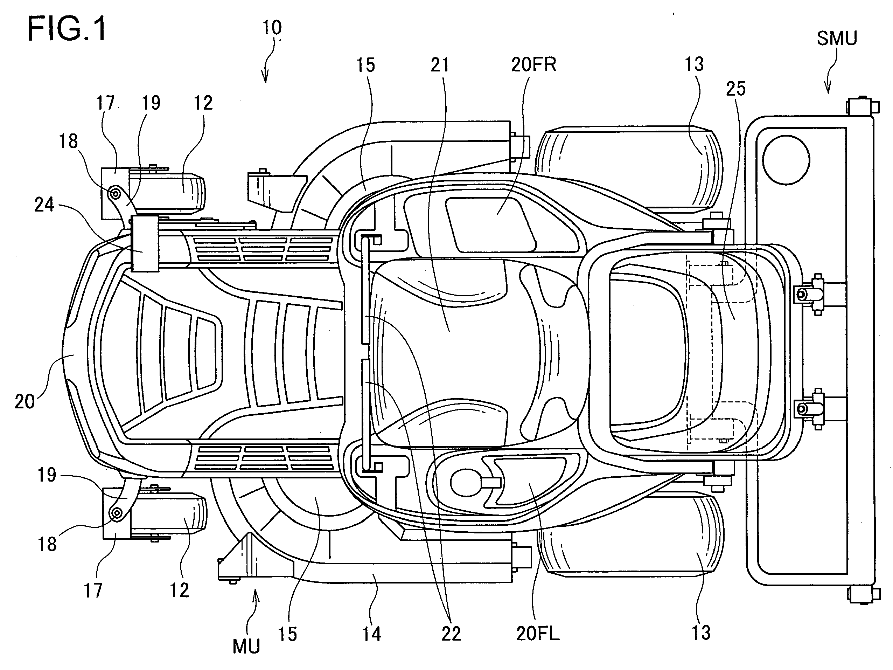

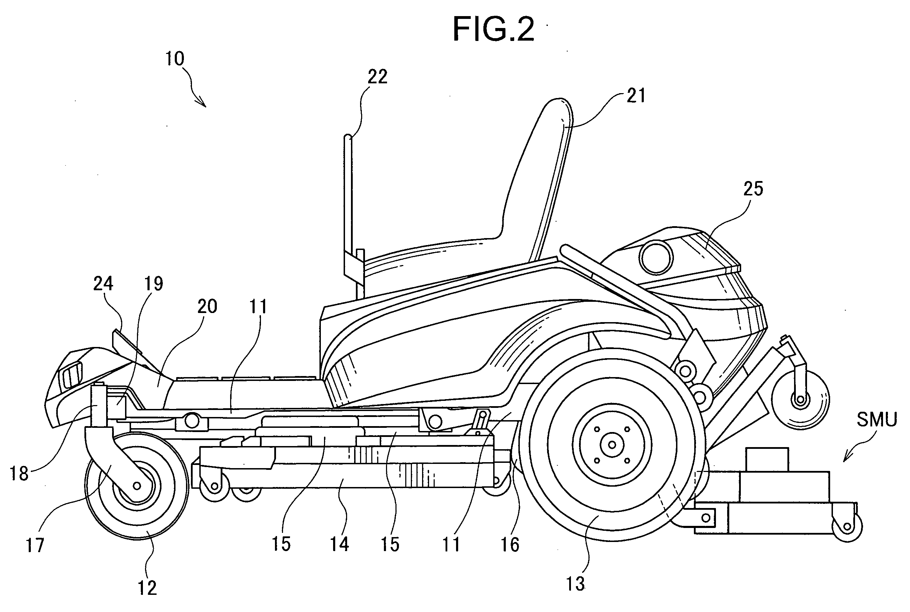

In the following, the best modes to carry out the present invention will be described with reference to the drawings. In the present specification, note that "front" indicates a direction of forward movement of an electric work vehicle, "rear" indicates a direction of rearward movement thereof, "right and left" respectively indicate right and left sides facing the forward direction, "up and down" indicate "upward and downward" direction of the electric work vehicle respectively. Fig. 1 is a plan view illustrating an electric lawn mower connected with a sub mower deck unit on a rear side thereof according to an exemplary electric work vehicle of the present invention, and Fig. 2 is a side view thereof.

The electric lawn mower (electric work vehicle) 10 executes lawn mowing work as main work. The electric lawn mower 10 includes a chassis (vehicle body frame) 11, a pair of front tires 12 on a lower front side, and a pair of rear tires (drive wheels) 13 on a lower rear side of the chassis 11. Further, a mower deck unit (first work unit) MU is disposed between the front tires 12 and the rear tires 13.

The mower deck unit MU includes a mower deck 14, two mower motors (first work motors) 15, 15, mower blades (first working portion) to mow a lawn, and so on. A rear side surface of the mower deck 14 is opened in order to discharge mowed lawn. The two mower blades are disposed aligned on the right and left sides inside the mower deck 14. The two mower blades are rotationally driven by the mower motors 15, 15 respectively.

A body cover 20 is overlaid on the chassis 11. The body cover 20 is configured to cover an entire portion of the chassis 11. An operator seat 21 is provided on the body cover 20 slightly in front of the rear tires 13. Travel operation levers 22, 22 to control travel of the electric lawn mower 10 are respectively provided on the right and left sides of the operator seat 21.

Additionally, the electric lawn mower 10 uses an electric motor to perform lawn mowing and traveling, and traveling motors 16, 16 are disposed on inner sides of the pair of the rear tires 13, 13 respectively. The rear tires 13, 13 are individually driven by the traveling motors 16, 16 respectively (note that an in-wheel motor may be provided inside each of the wheels of the rear tires 13, 13).

Power for the above-described two mower motors 15 and the two traveling motors 16 is supplied from a battery 25. The battery 25 is disposed at a rear portion of a machine body. More specifically, the battery 25 is detachably disposed between axles of the rear tires 13, 13 at a rear end of the chassis 11. The battery 25 includes four driven wheels, and has a configuration in which an operator can detach the battery 25 and move the battery by pushing and pulling the same. Note that the battery 25 includes a cover, and when a lid of the covers is opened, a power supply port is exposed.

A control unit described later is disposed below the operator seat 21. The control unit controls a rotational direction and a rotational rate of the traveling motor 16 of the electric lawn mower 10. The control unit has functions to control the traveling motor 16 and also control rotation of the mower motor 15, and further takes a role of correcting slight voltage change of the battery 25. Further, an autonomous travel program described later is stored in the control unit.

A rotary speed of the mower motor 15 is controlled so as to work with a rotary speed of the traveling motor 16. In other words, when a travel speed is accelerated, the rotary speed of the mower blade is also accelerated, and when the travel speed is dropped, the rotary speed of the mower blade is also dropped.

Each of the front tires 12, 12 are rotatably attached to a front tire bracket 17 via a shaft (i.e., the front tire 12 is driven to rotate relative to the front tire bracket 17). The front tire bracket 17 is formed in a gate shape, and includes a through hole at a center of a top surface portion. A bolt oriented upward is pierced through the through hole and fixed at the inside of a cylindrical front tire post 18. In this manner, the front tire bracket 17 is formed rotatable relative to the front tire post 18.

Each of right and left side surfaces of the front tire posts 18 is fixed to an end portion of a front frame 19. The front frame 19 has both ends formed in arc shapes.

The travel operation lever 22 is provided in a tiltable manner, and when an operator tilts the lever forward, the traveling motor 16 is rotated in the direction of forward movement. On the other hand, when the travel operation lever 22 is tilted rearward, the traveling motor 16 is rotated in the direction of rearward movement. Further, the rotational rate of the traveling motor 16 is varied by tilting amounts of the travel operation lever 22. More specifically, in the case where the travel operation lever 22 is tilted forward (rearward) by a large amount, the traveling motor 16 rotates faster in the direction of forward movement (rearward movement), and when the travel operation lever 22 is tilted forward (rearward) by a small amount, the traveling motor 16 is slowly rotated in the direction of forward movement (rearward movement). The operator can travel linearly forward and rearward, turn right and left, pivot, etc. by suitably operating the travel operation levers 22, 22 forward and rearward.

Further, an operation system button and the like not illustrated are provided at a right fender 20FR on the right side of the operator seat 21. For example, a lawn mowing switch to turn on/off rotation of the two mower blades inside the mower deck 14, a height adjustment button for the mower deck 14, and a later-described autonomous travel start button (button to select between travel with an operator riding on the vehicle and autonomous travel), etc. are provided. The lawn mowing switch is a limit switch which is turned on by being pushed by a finger of the operator and turned off by being pushed again. A cup holder, a tray to put small articles, etc. are provided at a left fender 20FL on the left side of the operator seat 21. Note that a reference sign 24 indicates a deck elevating/lowering pedal to elevate/lower the mower deck 14. The height of the mower deck 14 can be adjusted by pushing the above-described height adjustment button, operating the deck elevating/lowering pedal 24 with a right foot.

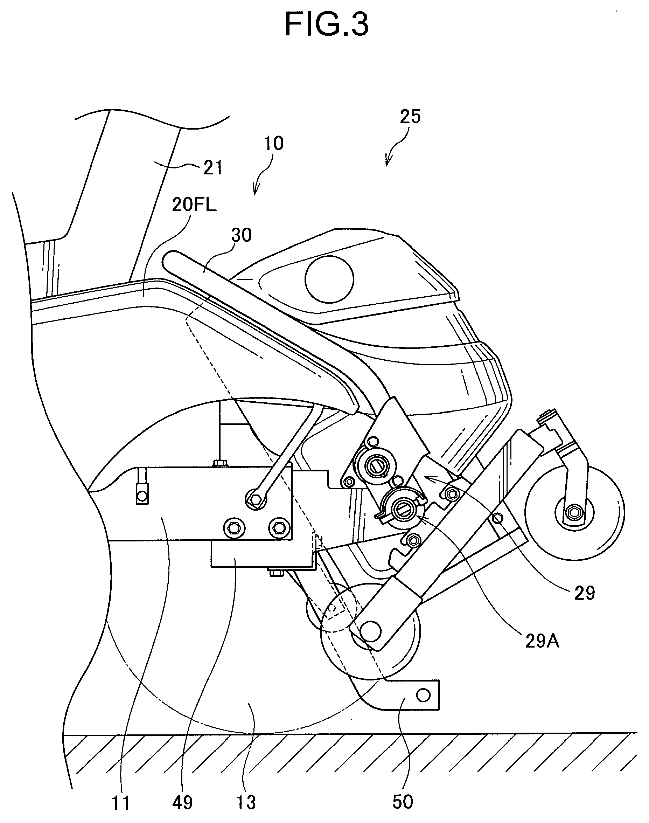

In FIG. 3, attachment of the battery 25 and the chassis (machine body) 11 are illustrated in detail. The battery 25 includes rotary portions 29 on both side surfaces, and a handle (gripping portion) 30 is attached so as to connect the rotary portions 29 on the both sides. Further, a lock pin 29A is removably attached to the rotary portion 29. On the other hand, a bracket 49 is attached at each of rear ends on the both sides of the chassis 11. A through hole is formed at the bracket 49 to penetrate the lock pin 29A. The lock pin 29A is once removed from the rotary portion 29, and the through hole of the bracket 49 is aligned with the through hole of the rotary portion 29. Then, the battery 25 is attached to the rear end of the chassis 11 by inserting the lock pin 29A (therefore, the battery 25 is detachably attached to the chassis 11).

Further, the rear end of the chassis 11 is attached with a pair of support arms 50, 50 extending obliquely rearward and configured to connect a sub mower deck unit (second work unit) SMU described later. The support arms 50 are located between the two driven wheels included in the battery 25, and disposed in a manner so as not to bother attachment/detachment of the battery 25.

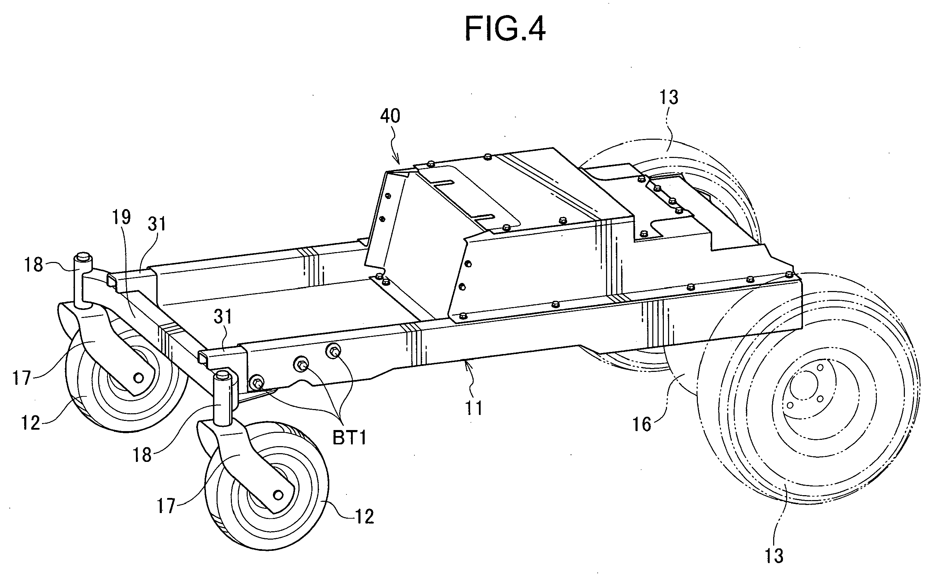

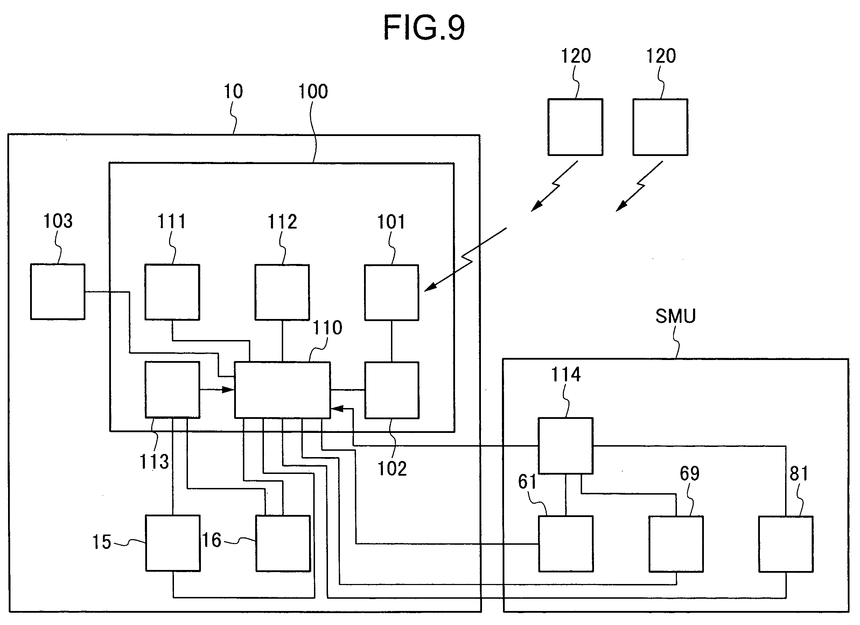

Fig. 4 is a perspective view illustrating the chassis 11. A box frame 40 is attached on the chassis 11. The control unit and other electrical components are housed inside the box frame 40. The items housed inside thereof include the above-described control unit, drivers for the mower motors 15 and traveling motors 16, an autonomous travel unit for autonomous travel of the electric lawn mower 10 (reference sign 100 described later in Fig. 9), and so on.

One end of each of the traveling motors 16, 16 is attached to the vicinity of the rear end of the chassis 11. Each of the rear tires 13 is attached to each of the traveling motors 16 via a transmission case. Brackets (front connecting portions) 31, 31 are fixed at front ends on the right and left sides of the chassis 11 with bolts BT1. Ends of the brackets 31 are connected to the front frame 19 by welding or the like.

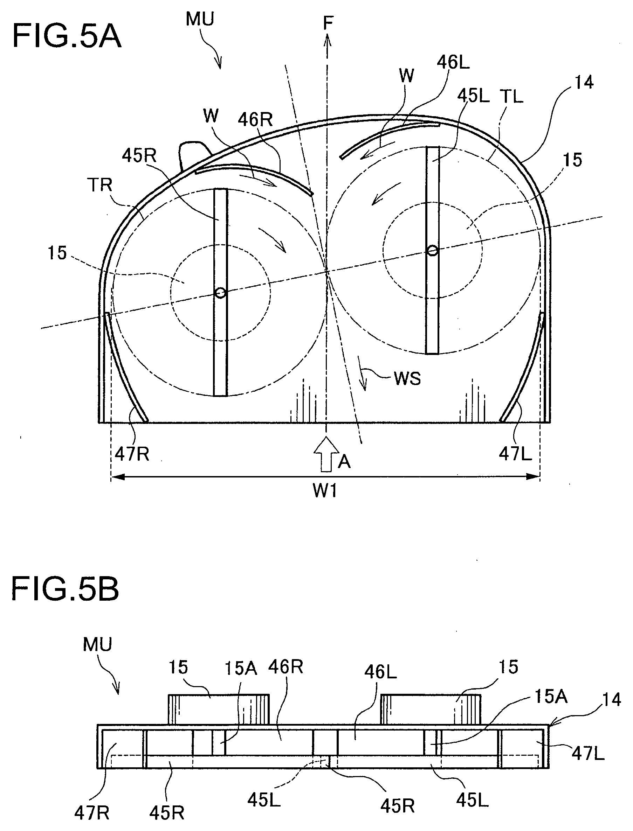

Figs. 5A and 5B are views for describing a configuration of the mower deck unit (first work unit) MU. The two mower motors 15, 15 are attached on an upper surface of the mower deck 14. Each of mower blades 45L, 45R is attached to a tip of each of output shafts 15A, 15A of the two mower motors 15, 15.

Here, as illustrated in a bottom view of the mower deck unit MU in Fig. 5A, the right and left mower blades 45L, 45R are disposed adjacent each other on an inner side of the mower deck 14. The mower blade (one of the mower blades) 45L is disposed so as to be positioned on a slightly oblique front side of the mower blade (the other mower blade) 45R (the mower blade 45R may be disposed so as to be positioned on a slightly oblique front side of the mower blade 45L as well). Tips of the two mower blades 45R, 45L draw rotational loci TR, TL and there is a small gap between the rotational loci TR, TL. Further, the rotational locus TL of the mower blade 45L and the rotational locus TR of the mower blade 45R are disposed so as to overlap by a predetermined distance in the rear view. Therefore, the lawn can be mowed in an area having a width W1 between a right-side end portion of the rotational locus TR of the mower blade 45R and a left-side end portion of the rotational locus TL of the mower blade 45L.

A pair of guide plates 46R, 46L is provided in a direction of forward movement F of the electric lawn mower 10 at a predetermined interval on the rear surface side of the mower deck 14 and also outside the rotational loci TR, TL of the mower blades 45R, 45L. The guide plates 46R, 46L are respectively fixed to the mower deck 14 by welding or the like.

The guide plate 46R and guide plate 46L are used to guide, in a desired direction, a flow of wind W generated by rotation of the mower blades 45R, 45L inside the mower deck 14. In this example, the guide plate 46R and guide plate 46L are provided to assist the wind W to be generated in a substantially rearward direction of the mower deck 14. Note that the mower blade 45R rotates clockwise and the mower blade 45L rotates anticlockwise in the bottom view.

Further, at the rear portion of the mower deck 14, rear guide plates 47R, 47L are fixed to the mower deck 14 by welding or the like. By providing the rear guide plates 47R, 47L, a flow of synthetic wind WS generated inside the mower deck 14 can be more correctly guided. Note that the synthetic wind WS is generated by synthesizing the wind W generated by the mower blade 45L with the wind W generated by the mower blade 45R, and flows rearward of the mower deck 14.

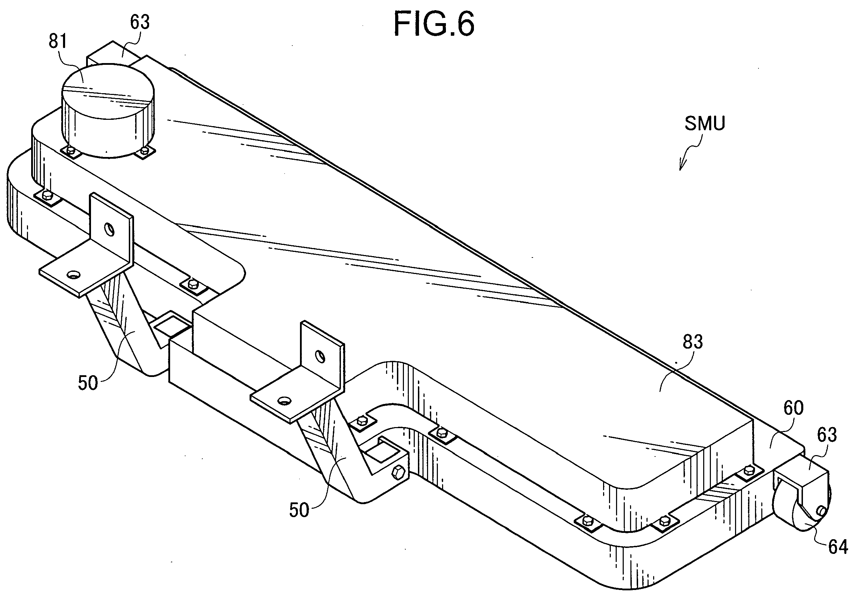

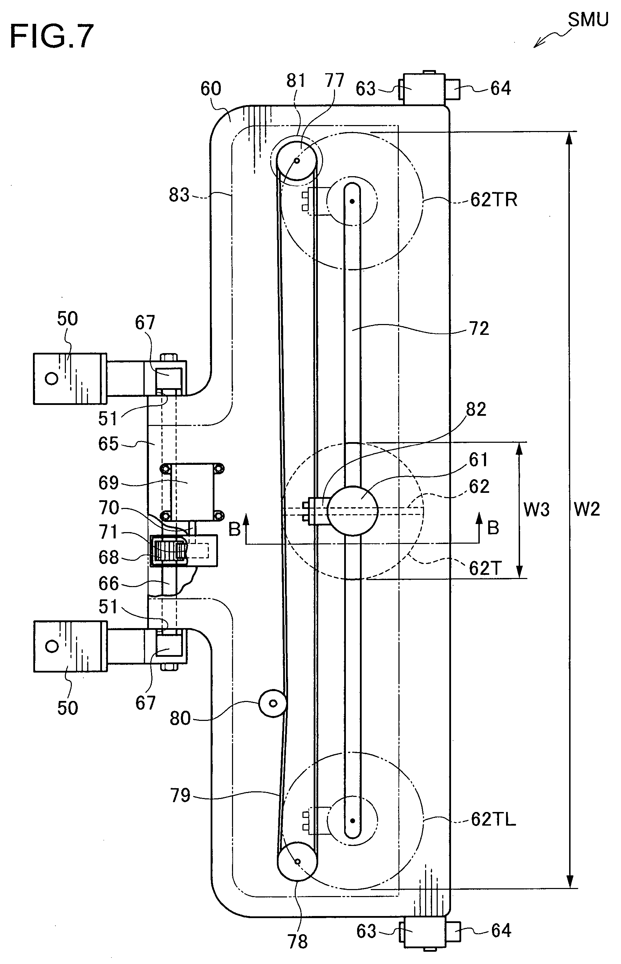

As illustrated in Figs. 6 and 7, the sub mower deck unit (second work unit) SMU is detachably attached to and supported by the pair of the support arms 50, 50. The sub mower deck unit SMU includes a sub mower deck 60, a sub mower motor (second work motor) 61, a sub mower blade (second working portion) 62, and so on. The sub mower blade 62 is disposed inside the sub mower deck 60, rotationally driven by the sub mower motor 61 to mow the lawn. Meanwhile, the sub mower deck unit SMU may have a configuration to be detachably attached to and supported by a front portion of the electric lawn mower 10.

The sub mower motor 61, a rotary motor and a slide motor described later, etc. are driven by power supplied from the battery 25. Note that the sub mower deck unit SMU may include a separate battery and be configured to drive the sub mower motor 61, rotary motor, slide motor, etc. by power supplied from this battery.

Here, a mowing height of the lawn (a length of the lawn after mowing) mowed by the sub mower blade 62 is different from the mowing height of the lawn mowed by the mower blades 45R, 45L included in the mower deck unit MU. The mowing height of the lawn mowed by the sub mower blade 62 is shorter (length of the lawn is shorter after mowing).

The sub mower deck 60 is substantially rectangular shaped, having a long length in the lateral direction in a planar view. A side surface on the rear portion of the sub mower deck 60 is opened in order to discharge the mowed lawn. Brackets 63, 63 are attached to the rear end portions of the right and left side surfaces of the sub mower deck 60. Wheels 64, 64 are rotatably attached to the brackets 63, 63.

Further, a projecting portion 65 projecting forward is provided at a center portion in the lateral direction of the sub mower deck 60. A lateral width of the projecting portion 65 is almost same as a width between the support arms 50, 50. A rotary shaft 66 is passed through the projecting portion 65 in the lateral direction. The sub mower deck 60 is rotatably supported by the rotary shaft 66. Both end portions of the rotary shaft 66 are attached to rear end portions of the pair of the support arms 50.

The rotary shaft 66 includes prism portions 67, 67 at the both end portions. The prism portions 67 are respectively fitted into groove portions 51, 51 provided at the rear end portions of the support arms 50, and further, the rotary shaft 66 is fixed to the support arms 50 with bolts or the like. Therefore, the rotary shaft 66 is fixed to the support arms 50 in a non-rotatable manner.

Additionally, a gear 68 is fixed to the rotary shaft 66. A rotary motor 69 is disposed on an upper surface of the projecting portion 65 of the sub mower deck 60. A gear 71 to be engaged with the gear 68 is fixed to an output shaft 70 of the rotary motor 69. Power of the rotary motor 69 is transmitted to the rotary shaft 66 via the output shaft 70, gear 71, and gear 68. Note that power transmission of the rotary motor 69 is not limited to the above-described configuration, and power may be transmitted via a chain or the like, for example.

Here, since the rotary shaft 66 is fixed to the support arms 50 in the non-rotatable manner, the sub mower deck 60 can be rotated relative to the rotary shaft 66 by power of the rotary motor 68.

The sub mower deck unit SMU is attached to the electric lawn mower 10 by attaching the rotary shaft 66 to the pair of the support arms 50. However, the attachment configuration of the sub mower deck unit SMU to the electric lawn mower 10 is not limited to the above-described configuration. Any configuration in which the sub mower deck unit SMU can be detachably attached to the electric lawn mower 10 may be applied.

For example, the rotary shaft 66 may be fixed to the support arms 50 with locking hooks or pins instead of the bolts. With this configuration, attachment/detachment of the sub mower deck unit SMU to/from the support arms 50 becomes easy. Further, a configuration in which the rotary shaft 66 is fixed to the support arms 50, and the support arms 50 are detachably attached to the chassis 11 may be applied, too.

Moreover, the configuration to rotate the sub mower deck 60 is not limited to the above-described configuration, and any configuration in which the sub mower deck 60 can be rotated or moved upward may be applied. For example, a configuration in which the sub mower deck 60 is slidably moved upward by using a slide mechanism including a hydraulic cylinder, a slide rail, a slide rail receiver, etc., may be applied, too.

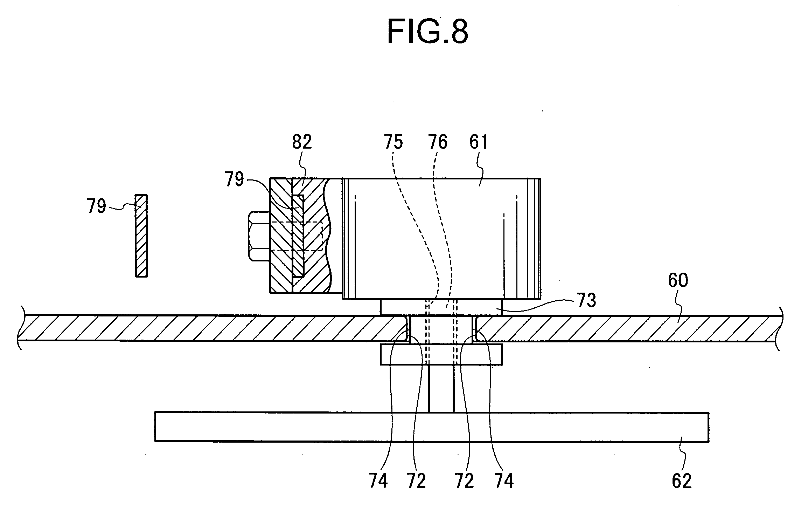

On an upper surface of the sub mower deck 60, a through hole 72 having a long length in the lateral direction and passed through the sub mower deck is formed. As illustrated in Fig. 8, a supporting member 73 having a substantially cylindrical shape is attached to a lower portion of the sub mower motor 61. The supporting member 73 includes, on outer peripheral surfaces of the front portion and rear portion, groove portions 74 located at a center portion in the vertical direction. Each of the groove portions 74 is fitted into the through hole 72. Further, an output shaft 76 of the sub mower motor 61 is passed through a through hole 75 of the supporting member 73. The sub mower blade 62 is fixed at a tip portion of the output shaft 76. Therefore, the sub mower motor 61 and the sub mower blade 62 are integrally attached to the sub mower deck 60 via the supporting member 73, and further can be slidably moved in the lateral direction by using the through hole 72 as a guide.

Further, a drive pulley 77 is disposed at a right-side end portion on an upper surface of the sub mower deck 60, and a driven pulley 78 is provided at a left-side end portion thereof. A belt 79 which is an endless body is stretched between the drive pulley 77 and the driven pulley 78. A tension pulley 80 is provided in a middle portion of the belt 79. The drive pulley 77, driven pulley 78, and tension pulley 80 are rotatably supported by the sub mower deck 60. The drive pulley 77 is fixed to an output shaft of a slide motor 81. Tension is applied to the belt 79 by the tension pulley 80. Power of the slide motor 81 is transmitted to the belt 79 via the drive pulley 77. The drive pulley 77, driven pulley 78, belt 79, tension pulley 80, and slide motor 81 are disposed in front of the through hole 72.

A connecting member 82 is disposed on an outer peripheral surface of a front portion of the sub mower motor 61. The sub mower motor 61 is attached to a part of the belt 79 via the connecting member 82. Therefore, the belt 79 is rotationally moved by rotating the slide motor 81 in a direction of normal rotation or a direction of reverse rotation, and the connecting member 82 attached to the belt 79 is slidably moved in the left or right direction. Further, the sub mower motor 61 and sub mower blade 62 attached to the belt 79 via the connecting member 82 are configured to be integrally and slidably moved in the left or right direction.

Here, a reference sign 62T in Fig. 7 indicates a rotational locus of the tip of the sub mower blade 62. A reference sign 62TR indicates a rotational locus of the tip of the sub mower blade 62 when the sub mower motor 61 and sub mower blade 62 are moved to the right-side end portion. A reference sign 62TL indicates the rotational locus of the tip of the sub mower blade 62 when the sub mower motor 61 and sub mower blade 62 are moved to the left-side end portion.

Further, a lateral moving unit including the drive pulley 77, driven pulley 78, belt 79, tension pulley 80, etc. and capable of integrally moving the sub mower motor 61 and sub mower blade 62 in the lateral direction, the sub mower motor 61, and so on are covered by a cover 83. The slide motor 81 is fixed on an upper surface of the cover 83. With this configuration, clods, lawn, etc. can be prevented from being adhered or stuck to the lateral moving unit, and safety measures can be provided by avoiding malfunction occurrence, contact of a hand to respective member being operated, and so on.

Next, operation of the sub mower deck unit SMU in lawn mowing work by the electric lawn mower 10 in which the sub mower deck unit SMU is connected on the rear side as described above will be described. First, the electric lawn mower 10 travels forward to mow the lawn by the mower deck unit MU disposed between the front tires 12 and the rear tires 13. The area of the lawn mowed by the mower deck unit MU is the area having the lateral width W1 illustrated in Fig. 5A.

Here, the mowing height H1 of the lawn mowed by the mower deck unit MU is determined by a distance between the mower blades 45R, 45L included in the mower deck unit MU and a ground surface. The lawn mowing height H1 can be adjusted by adjusting the height of the mower deck 14 by using the above-described height adjustment button and changing the distance between the mower blades 45R, 45L and the ground surface.

Next, the lawn having been mowed by the mower deck unit MU at the height H1 is mowed by the sub mower deck unit SMU on the rear side. Here, a mowing height H2 of the lawn mowed by the sub mower deck unit SMU is determined by a distance between the sub mower blade 62 included in the sub mower deck unit SMU and the ground surface. With the above-described configuration, the lawn mowing height H2 can be changed by changing the vertical setting position of the sub mower blade 62. Further, a configuration in which the lawn mowing height H2 can be changed by providing a unit to change a vertical position of the sub mower deck unit SMU or a unit to vertically move the sub mower blade 62 may be also applied.

An area of lawn mowed by the sub mower deck unit SMU at the height H2 is determined by forward movement of the electric lawn mower 10 and lateral movement of the sub mower blade 62. As illustrated in Fig. 7, a maximum lateral width where the sub mower deck unit SMU can mow the lawn at the height H2 is W2. The width W2 is a width between the right-side end portion of the rotational locus 62TR of the tip of the sub mower blade 62 when the sub mower blade 62 moves to the right-side end portion and the left-side end portion of the rotational locus 62TL of the tip of the sub mower blade 62 when the sub mower blade 62 moves to the left-side end portion. The lawn in the area having the width W2 can be mowed at the height H2 by mowing the lawn while moving the sub mower blade 62 from the right-side end portion (left-side end portion) to the left-side end portion (right-side end portion) in a state that the electric lawn mower 10 is stopped from traveling forward (stopped state). Here, the width W2 is the width almost same as the width W1.

On the other hand, a minimum lateral width where the sub mower deck unit SMU can mow the lawn at the height H2 is a width W3. The lawn in the area of the width W3 can be mowed at the height H2 by mowing the lawn without laterally moving the sub mower blade 62 in the state that the electric lawn mower 10 is stopped from traveling forward (stopped state). Here, the width W3 is same as a length of the sub mower blade 62.

Further, to make a state that the sub mower deck unit SMU does not mow the lawn, the sub mower deck 60 is rotated upward relative to the rotary shaft 66 by the rotary motor 69 from a ground contact state (state in which the wheels 64 contact the ground surface and the sub mower blade 62 is disposed horizontal to the ground surface). Then, the sub mower deck 60 is held at a rotary angle at which the sub mower blade 62 does not contact the lawn. Therefore, the sub mower deck unit SMU is prevented from mowing the lawn. Meanwhile, lawn mowing can be also prevented by stopping rotation of the sub mower motor 61, but the lawn may be bent down because the lawn contacts the sub mower blade 62. Therefore, preferably, lawn mowing is prevented by making a state that the lawn does not contact the sub mower blade 62.

The sub mower deck unit SMU can mow the lawn of a desired area having a lateral width between the width W2 and the width W3 such that the lawn height therein becomes H2 by forward movement and stop of the electric lawn mower 10 and lateral movement of the sub mower blade 62. Also, the sub mower deck unit SMU can be prevented from mowing the lawn.

Next, a description will be given for the lawn mowing work to create a desired design such as an image and/or text in detail with gradation formed based on differences in the lawn mowing height by considering the lawn as a canvas. This lawn mowing work is executed in an unmanned state by an autonomous travel system using a plurality of GPS satellites as illustrated in Fig. 9.

The autonomous travel system includes a plurality of GPS satellites 120, 120 in addition to the electric lawn mower 10 including an autonomous travel unit 100.

The autonomous travel unit 100 includes a GPS antenna 101, a GPS receiving unit 102, a control unit 110 as a control unit including a CPU, a RAM, a ROM, etc., an operating unit 111, a display unit 112, and so on. A radio signal received at the GPS antenna 101 from the GPS satellite 120 is transmitted to the control unit 110 through a cable via the GPS receiving unit 102. The control unit 110 stores the autonomous travel program.

The operating unit 111 is an interface to perform later-described setting for autonomous travel and initial setting for the GPS, and is connected to the control unit 110 via the cable. The display unit 112 is connected to the control unit 110 via the cable, and displays a state of data processing in the control unit 110, and various kinds of settings input from the operating unit 111. A main body sensor 113 detects various kinds of information of the electric lawn mower 10, such as a processing state of the autonomous travel program and operating states of the traveling motor 16 and mower motor 15 at the time of autonomous travel.

Further, the operating unit 111 is at least a unit such as a keyboard, a switch, a lever, a push button, and a dial by which an operator can execute input operation, and a form thereof is not limited. Additionally, the operating unit 111 and the display unit 112 may be a touch panel integrally formed as well. The operating unit 111 and the display unit 112 are included in the right fender 20FR.

Further, the sub mower deck unit SMU includes a sub mower deck unit sensor 114. The sub mower deck unit sensor 114 is configured to detect various kinds of information of the sub mower deck unit SMU, such as operating states of the sub mower motor 61, rotary motor 69, and slide motor 81 at the time of autonomous travel.

When the main body sensor 113 or the sub mower deck unit sensor 114 detects an abnormality (i.e., when work by autonomous travel becomes not operable), an alarm unit 103 notifies surroundings of the abnormality. The alarm unit 103 may be anything capable of notifying the surroundings of the abnormality, such as an alarm sound generating device and a light blinking device.

The control unit 110 is connected to the main body sensor 113, sub mower deck unit sensor 114, traveling motor 16, mower motor 15, sub mower motor 61, rotary motor 69, slide motor 81, alarm unit 103, and so on. The traveling motor 16, mower motor 15, sub mower motor 61, rotary motor 69, slide motor 81, alarm unit 103, etc. operate under the control of the control unit 110.

In the autonomous travel system having the above-described configuration, a radio signal sent from the GPS satellite 120 at a certain time is received by the GPS antenna 101 of the autonomous travel unit 100 included in the electric lawn mower 10, and transmitted to the control unit 110 via the GPS receiving unit 102.

In the control unit 110, a position of the autonomous travel unit 100 is calculated based on information of the radio signals received at the GPS antenna 101 from the plurality of GPS satellites 120. The above-described calculation is performed by the autonomous travel program stored in the control unit 110.

With this configuration, the position of the electric lawn mower 10 can be measured in a work area of lawn mowing.

The main body sensor 113 is a general term for sensors that detect necessary information to execute the lawn mowing work by autonomous travel, such as a travel speed and three-dimensional posture of the electric lawn mower 10, and rotary speeds of the traveling motor and the mower motor.

More specifically, a rotary speed sensor for the right and left traveling motors 16, 16, a rotary speed sensor for the right and left mower motors 15, 15, a vehicle orientation sensor, a vehicle inclination sensor, etc. are the main body sensors (for example, the travel speed of the electric lawn mower 10 can be slowed down by the control unit 110 when the three-dimensional posture is detected and the posture of the electric lawn mower 10 is detected to be unstable for traveling). Detection signals from the main body sensors 113 are transmitted to the control unit 110.

The sub mower deck unit sensor 114 is a general term for sensors that detect necessary information for the sub mower deck unit SMU to execute lawn mowing, such as rotary speeds and rotary directions of the sub mower motor 61, rotary motor 69, and slide motor 81 included in the sub mower deck unit SMU, positions of the sub mower motor 61 and sub mower blade 62 in the lateral direction, and a rotary angle of the sub mower deck 60.

More specifically, a rotary speed sensor of the sub mower motor 61, a rotary speed sensor of the rotary motor 69, a rotation sensor of the slide motor 81, a potentiometer in the lateral direction for the sub mower motor 61 and sub mower blade 62, a potentiometer in the rotary direction for the sub mower deck 60 are the sub mower deck unit sensors. Detection signals from the sub mower deck unit sensors 114 are transmitted to the control unit 110.

Based on positional information of the electric lawn mower 10 calculated based on the detection signals from the main body sensors 113 and sub mower deck unit sensors 114 as well as the radio signals from the plurality of GPS satellites 120, rotation of the traveling motor 16, rotation of the mower motor 15, rotation of the sub mower motor 61, rotation of the rotary motor 69, and rotation of the slide motor 81 of the electric lawn mower 10 are controlled by the autonomous travel program stored in the control unit 110.

Further, the lawn mowing work by autonomous travel of the electric lawn mower 10 is started by pushing the autonomous travel start button included in the operational buttons disposed at the right fender 20FR to turn on a circuit.

Then, the electric lawn mower 10 starts the lawn mowing work by autonomous travel based on the autonomous travel program stored in the control unit 110, positional information of the lawn mowing work area, and a work pattern in each point. At this point, the electric lawn mower 10 periodically receives the radio waves from the GPS satellites 120. Here, the work pattern includes travel speed information of the electric lawn mower 10, operational information of the mower deck unit MU, operational information of the sub mower deck unit SMU.

When the electric lawn mower 10 reaches a work finish point, the electric lawn mower automatically finishes the autonomous travel and stops. When the autonomous travel is finished, an autonomous travel start button included in the operational buttons disposed at the right fender 20FR is pushed again to turn off the circuit. Note that the electric lawn mower 10 may have a configuration including an emergency stop unit. For example, an emergency stop button may be provided in each of the right fender 20FR and the left fender 20FL such that the electric lawn mower 10 being autonomously traveling can be forcedly stopped by the operator approaching to the electric lawn mower 10 and pushing the emergency stop button.

When the electric lawn mower 10 falls into an abnormal state during autonomous travel, i.e., becomes unable to travel due to some reason, or when the mower motor 15, the sub mower motor 61, etc. become not rotatable, the main body sensor 113 and the sub mower deck unit sensor 114 detect such situations and actuate the alarm unit 103 based on a signal from the control unit 110, and enables the surroundings to recognize the abnormal state of the electric lawn mower 10.

Here, multiple combinations of the autonomous travel route of the electric lawn mower 10 with the work pattern at each point of the lawn mowing work can be created.

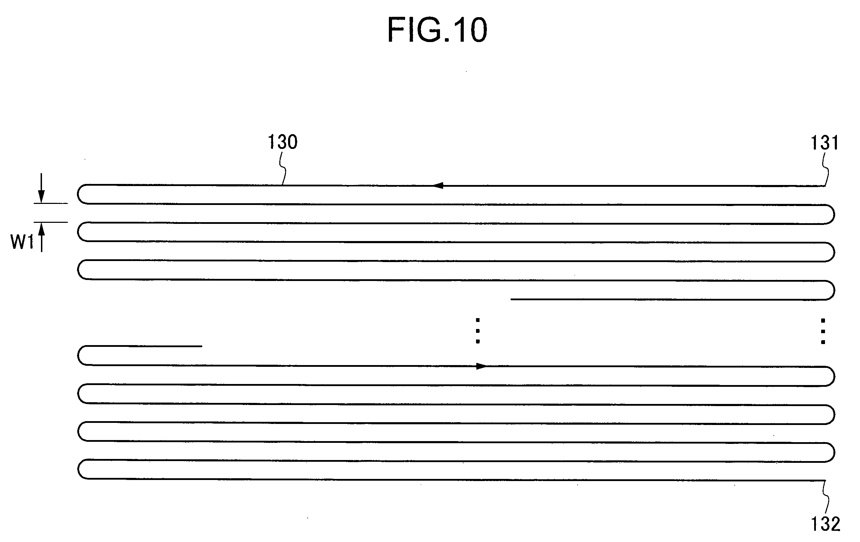

Next, an exemplary combination of the autonomous travel route with the work pattern of the lawn mowing work to create a desired design in detail will be described. An autonomous travel route 130 of the electric lawn mower 10 includes a reciprocating linear travel route inside a work area as illustrated in Fig. 10. A work start position is a point 131, and a work finish position is a point 132. A distance between neighboring linear portions of the travel route is substantially same as a width W1. The autonomous travel route 130 includes the route along which the lawn in an entire area inside the work area can be mowed by the mower deck unit MU.

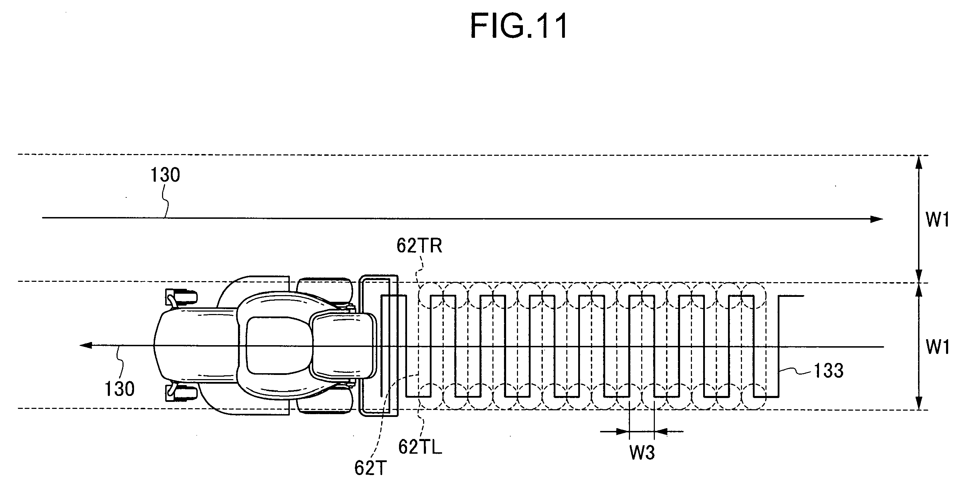

When the electric lawn mower 10 autonomously travels along the above-described autonomous travel route 130, the sub mower blade 62 of the sub mower deck unit SMU is laterally moved in a reciprocating manner. At this point, the sub mower blade is moved such that a movement locus of a center of the sub mower blade 62 becomes as indicated by a movement locus 133 illustrated in Fig. 11. A distance between neighboring linear portions of the movement loci 133 in a front-rear direction is substantially same as a width W3.

This movement locus 133 can be formed by combining forward movement and stop of the electric lawn mower 10 with lateral reciprocating movement of the sub mower blade 62.

More specifically, while the sub mower blade 62 is positioned at the right-side end portion (or left-side end portion), the electric lawn mower 10 moves forward by a distance of the width W3 and stops. While the electric lawn mower 10 is in a stop state, the sub mower blade 62 is moved from the right-side end portion (or left-side end portion) to the left-side end portion (or right-side end portion). Next, while the sub mower blade 62 is positioned at the left-side end portion (or right-side end portion), the electric lawn mower 10 moves forward by the distance of the width W3, and then stops. While the electric lawn mower 10 is in the stop state, the sub mower blade 62 is moved from the left-side end portion (or right-side end portion) to the left-side end portion (or right-side end portion). By repeating the above operation, the center of the sub mower blade 62 moves along the movement locus 133.

Therefore, the electric lawn mower 10 travels along the autonomous travel route 130 and the center of the sub mower blade 62 moves along the movement locus 133, thereby achieving to mow the lawn of the entire area inside the work area by the sub mower deck unit SMU.

Here, a desired design can be created in detail by specifying positions to be mowed by the sub mower deck unit SMU so as to obtain the desired design. In the following, an example of specifying the positions to be mowed by the sub mower deck unit SMU will be described in detail.

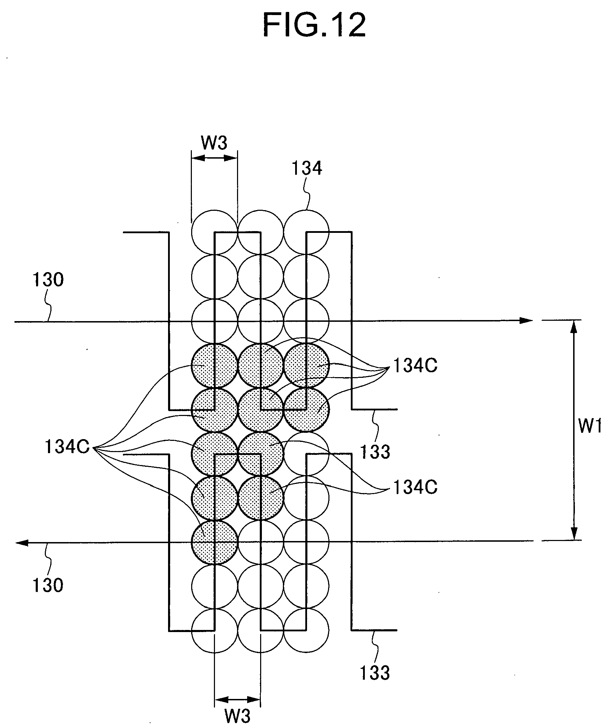

An area where the sub mower blade 62 executes lawn mowing (area where the lawn mowing height is H2) is specified to an area inside a virtual circle 134 selected from among areas inside a plurality of virtual circles 134 illustrated in Fig. 12. Diameters of the virtual circles 134 are same as the length of the sub mower blade 62 (width W3). Centers of the virtual circles 134 are located on the movement locus 133. Further, the virtual circles 134 are arrayed at substantially same intervals in the lateral direction so as not to overlap adjacent virtual circles 134 in the area where the sub mower blade 62 is moved from the right-side end portion (or left-side end portion) to the left-side end portion (or right-side end portion). Therefore, the centers of the virtual circles 134 are located on the movement locus 133 and also arrayed at the substantially same intervals in the entire area inside the work area.

Here, the desired design to be created inside the work area with the gradation formed based on the differences in the lawn mowing height is an image formed of two-dimensional array of dots. Since a method of converting the design to the image formed of the two-dimensional array is a known technique, a detailed description therefor will be omitted. Further, image processing such as magnification, reduction, and rotation may be applied, too. Note that in the case where the image formed of the two-dimensional array has contrasting density, known binarization processing is applied.

Considering the above-described virtual circle 134 as one dot, the desired design which is an image formed of the two-dimensional array is adapted into the plurality of virtual circles 134 inside the work area. Note that either one of two kinds of information included in the binarized image is adapted into the virtual circle 134. Therefore, based on the adapted information, whether the virtual circle 134 is a virtual circle 134C to be a lawn mowing area or not to be the lawn mowing area is specified. The sub mower deck unit SMU is operated such that the lawn inside the virtual circle 134C to be the lawn mowing area is mowed by the sub mower blade 62.

The operation of the sub mower deck unit SMU is determined by forward movement and stop of the electric lawn mower 10, lateral movement of the sub mower blade 62, and a state of rotation of the sub mower deck 60 relative to the rotary shaft 66.

First, as described above, the sub mower blade 62 is moved such that the center of the sub mower blade 62 is located on the movement locus 133. At this point, the sub mower blade 62 is rotated by the sub mower motor 61. Further, the sub mower deck 60 is rotated upward relative to the rotary shaft 66 from the ground contact state (state in which the wheel 64 contacts the ground surface and the sub mower blade 62 is disposed horizontal to the ground surface), and the sub mower blade 62 is held at a rotary angle so as not to contact the lawn. Therefore, the sub mower blade 62 is rotated but is in a state not to mow the lawn.

Next, when the sub mower blade 62 is moved and the center of the sub mower blade 62 is located at the center position of the virtual circle 134C, the movement of the sub mower blade 62 is stopped. The sub mower deck 60 is rotated downward relative to the rotary shaft 66 and made to the ground contact state. Therefore, the lawn in the area of the virtual circle 134C is mowed by the sub mower blade 62. Then, the sub mower deck 60 is rotated upward relative to the rotary shaft 66 from the ground contact state, and the sub mower blade 62 is held at the rotary angle so as not to contact the lawn. The sub mower blade 62 is started to move again. By repeating the above operation, the lawn inside the area of the virtual circle 134C of the work area can be mowed by the sub mower deck unit SMU at the mowing height H2.

The electric lawn mower 10 executes the lawn mowing work by autonomous travel based on the above-described autonomous travel route 130 and work pattern (travel speed information of the electric lawn mower 10, operational information of the mower deck unit MU, and operational information of the sub mower deck unit SMU). The lawn inside the work area can be mowed by the mower deck unit MU at the height H1, and also the lawn in the area of the virtual circle 134C can be mowed by the sub mower deck unit SMU at the height H2.

Therefore, the gradation is formed by providing dots representing the lawn mowing height H2 inside the work area, thereby achieving to create the desired design inside the work area by using the two-dimensional array of the dots.

Note that the autonomous travel route 130 is a linear reciprocating route, namely, a simple route. The operational information of the sub mower deck unit SMU is also determined by the state of movement of the sub mower blade 62 and rotation of the sub mower deck 60 relative to the rotary shaft 66, which is a relatively simple configuration. Since the two-dimensional array can be adapted, adapting the desired design into the work area can be easily adapted.

Therefore, the design such as an image and/or text can be easily created with the gradation formed based on the differences in the lawn mowing height by considering the lawn as a canvas. Further, since the differences in the lawn mowing height are generated by the sub mower deck unit SMU capable of mowing the lawn in an area smaller than the case of the mower deck unit MU, the design such as an image and/or text can be created in detail.

Note that the autonomous travel route and work pattern (travel speed information of the electric lawn mower 10, operational information of the mower deck unit MU, and operational information of the sub mower deck unit SMU) are not limited to the above-described configurations. The autonomous travel route is not limited to the linear reciprocating route but may be a route using a curved line as well. Further, the design created inside the work area is not limited to expression by the two-dimensional array of the dots.

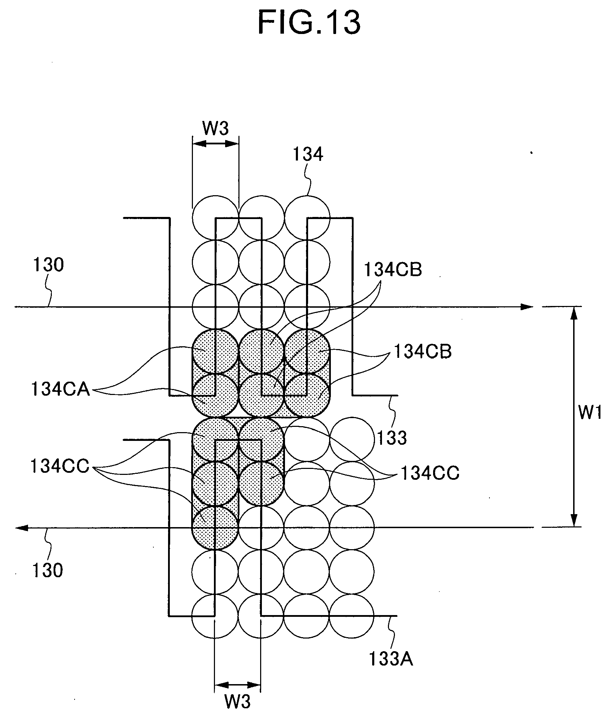

For example, as illustrated in Fig. 13, in the case where continuous adjacent virtual circles 134 are the lawn mowing areas at the time of moving the sub mower blade 62, the lawn mowing areas may be set as 134CA, 134CB, and 134CC. In other words, the sub mower blade 62 is moved while mowing the lawn. With this configuration, a frequency of rotational operation of the sub mower deck 60 relative to rotary shaft 66 can be reduced and a period of the lawn mowing work can be shortened.

Further, in the case where there is no virtual circle 134C to be the lawn mowing area inside the area where the sub mower blade 62 is moved from the right-side end portion (or left-side end portion) to the left-side end portion (or right-side end portion), a movement locus 133A may be without lateral movement of the sub mower blade 62. With this configuration, a frequency of lateral movement of the sub mower deck 60 can be reduced, and the period of the lawn mowing work can be shortened.

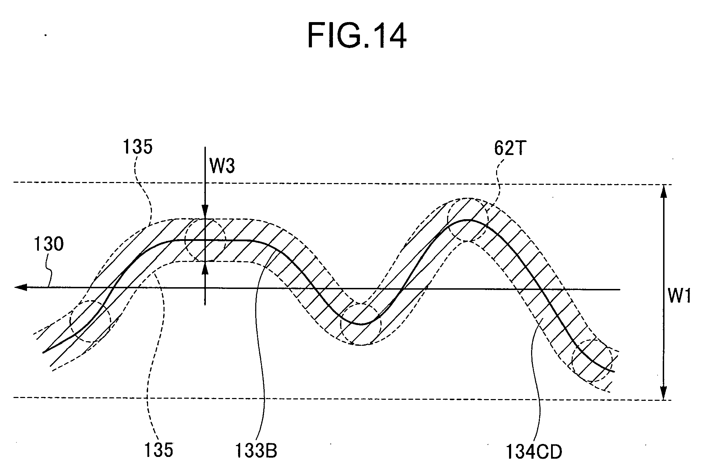

Further, according to the above-described example, the desired design is created inside the work area by using the two-dimensional array of the dots, but expression is not limited to the two-dimensional array of the dots. The sub mower deck unit SMU may have the movement locus of the center of the sub mower blade 62 such as a curved movement locus 133B as illustrated in Fig. 14 by combining travel of the electric lawn mower 10 with lateral movement of the sub mower blade 62. As a result, a lawn in an area 134CD can be mowed at the mowing height H2.

The area 134CD is a continuous area having a lateral width W3 with respect to the travel direction of the electric lawn mower 10. The lateral width of the area 134CD is determined by the length of the sub mower blade 62, and can be changed by changing the length of the sub mower blade 62. Therefore, even while the electric lawn mower 10 is linearly traveling, the sub mower deck unit SMU can make a curved boundary line 135 between the lawn to have the mowing height H1 and the lawn to have the mowing height H2.

The desired design may be created inside the work area by expressing a contour of the design or the like, using the boundary line 135 between the lawns having the different mowing heights as described above. Note that complex travel along the contour of the design is not required and the desired design can be created inside the work area by relatively simple control because the electric lawn mower 10 linearly travels.

Further, the autonomous travel system is not limited to the above-described configuration. According to the above-described configuration, the electric lawn mower 10 includes the operating unit 111 and the display unit 112. However, the autonomous travel system may also include an external operation unit separately from the electric lawn mower 10, by which setting for the autonomous travel of the electric lawn mower 10 and initial setting for the GPS are executed by a communication unit such as radio and a cable. With this configuration, inputting and changing the autonomous travel route, work pattern, etc. can be easily executed. Further, a load of control operation by the control unit 110 can be reduced.

Additionally, the electric lawn mower 10 may be configured to communicate with the reference station units by disposing multiple reference station units including GPS antennas, GPS receiving units, communication units, etc. in an area where the lawn mowing work is executed. According to the above-described configuration, a position of the electric lawn mower 10 is calculated based on the radio signal information from the GPS satellites 120. The position of the electric lawn mower 10 is calculated only from a positional relation between the GPS satellites 120 and the electric lawn mower 10. However, since the configuration includes the multiple reference station units, the position of the electric lawn mower 10 is calculated by the positional relation between the GPS satellites 120 and the electric lawn mower 10, a positional relation between the GPS satellites 120 and a mobile station unit, and a positional relation between the mobile station unit and the electric lawn mower 10. Therefore, the position of the electric lawn mower 10 can be more correctly calculated. Therefore, the electric lawn mower 10 can execute the lawn mowing work by the autonomous travel with high accuracy.

Further, mapping may be executed by the electric lawn mower 10 inside the work area before the electric lawn mower 10 starts the lawn mowing work by the autonomous travel. The electric lawn mower 10 may be configured to include a laser scanner, and made to travel inside the work area for mapping, thereby reading terrain information inside the work area by using the laser scanner. Based on the read terrain information, the work pattern is corrected, and the electric lawn mower 10 starts the lawn mowing work by the autonomous travel. With this configuration, the electric lawn mower 10 can execute the lawn mowing work by the autonomous travel with high accuracy.

Further, the electric lawn mower 10 may be configured to include an infrared sensor. When the electric lawn mower 10 autonomously travels, infrared is emitted forward and also reflected infrared is detected. With this configuration, an obstacle existing forward in the travel direction can be detected. The electric lawn mower 10 can be stopped before abutting the obstacle, and can be made to travel so as to avoid the obstacle. As a result, failure of the electric lawn mower 10 can be prevented.

Moreover, the electric lawn mower 10 may be configured to include an operating unit to operate the sub mower deck unit SMU in order that an operator rides and can operate the sub mower deck unit SMU. Here, the operating unit is at least needed to be capable of operating the sub mower motor 61, rotary motor 69, and slide motor 81, and a form thereof is not limited, such as a keyboard, a switch, a lever, a push button, and a dial.

Further, a configuration capable of integrally moving the sub mower motor 61 and the sub mower blade 62 in the lateral direction is not limited to the above-described configuration. For example, a configuration including a power transmission mechanism in which the belt 79 having an endless body is a chain, and the drive pulley 77 and the driven pulley 78 are sprockets may be applied, too.

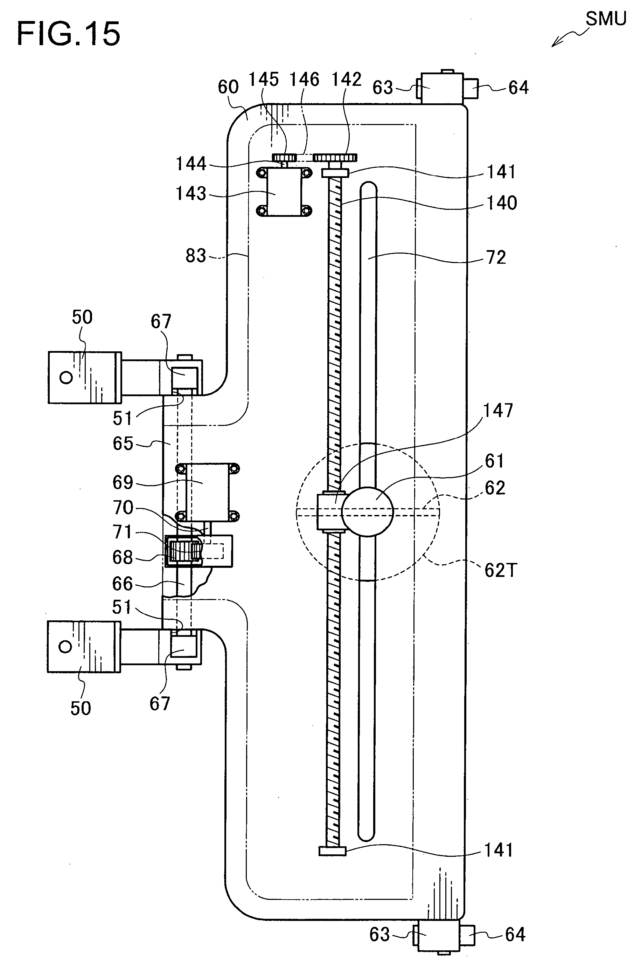

Further, the configuration capable of integrally moving the sub mower motor 61 and the sub mower blade 62 in the lateral direction may be a configuration illustrated in Fig. 15. A screw shaft 140 is transversely disposed across the upper surface of the sub mower deck 60 in a manner rotatable in the lateral direction. The screw shaft 140 is supported by right and left bearings 141, 141 in a pivotable manner. A male screw is provided on an outer peripheral surface of the screw shaft 140. A sprocket 142 is fixed at a right-side end portion of the screw shaft 140. Additionally, a slide motor 143 is disposed on the upper surface of the sub mower deck 60, and a sprocket 145 is fixed to an output shaft 144 of the slide motor 143. The sprocket 142 and the sprocket 145 are connected with a chain 146. Power of the slide motor 143 is transmitted to the screw shaft 140 via the output shaft 144, sprocket 145, chain 146, and sprocket 142. Note that power transmission of the slide motor 143 is not limited to the above-described configuration, and for example, power may be transmitted via a belt, a pulley, etc., or may be transmitted via a gear.

A connecting member 147 is provided on an outer peripheral surface of the front portion of the sub mower motor 61. The connecting member 147 includes a through hole penetrating in the lateral direction. On an inner peripheral surface of the through hole, a female screw to be fitted with the male screw of the screw shaft 140 is provided, and the connecting member 147 is attached to the screw shaft 140 via the screw structure. Therefore, the screw shaft 140 is rotated by rotating the slide motor 143 in the direction of normal rotation or in the direction of reverse rotation, and the connecting member 147 attached to the screw shaft 140 is slidably moved in the left or right direction. Further, the sub mower motor 61 and sub mower blade 62 attached to the screw shaft 140 via the connecting member 147 are configured to be integrally and slidably moved in the right or left direction.

With this configuration, the sub mower motor 61 can be more correctly moved in the lateral direction. Also, the slide motor 143 can be housed within the cover 83, thereby achieving to save the space.

Further, the electric lawn mower 10 may be configured to include a motor in order to move the mower deck unit MU vertically. With this configuration, the mowing height H1 of the lawn mowed by the mower deck unit MU can be set not constant but at a plurality of mowing heights. Accordingly, the differences of the lawn mowing height can be increased, and a range of the gradation is broadened. Therefore, more clearly creating the design such as an image and/or text becomes easy.

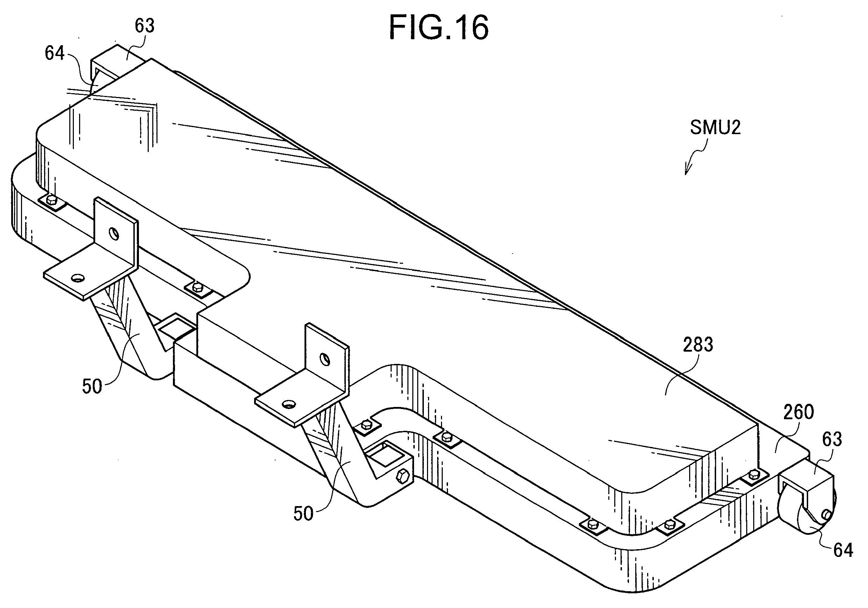

Additionally, the sub mower deck unit (second work unit) may be configured to include a plurality of sub mower motors (second work motors), and a plurality of sub mower blades (second working portions). Figs. 16 to 18B are diagrams illustrating a sub mower deck unit SMU2 as a different example of the sub mower deck unit SMU. Note that other configurations and control except for a configuration and control of the sub mower deck unit SMU2 are same as the above-described example.

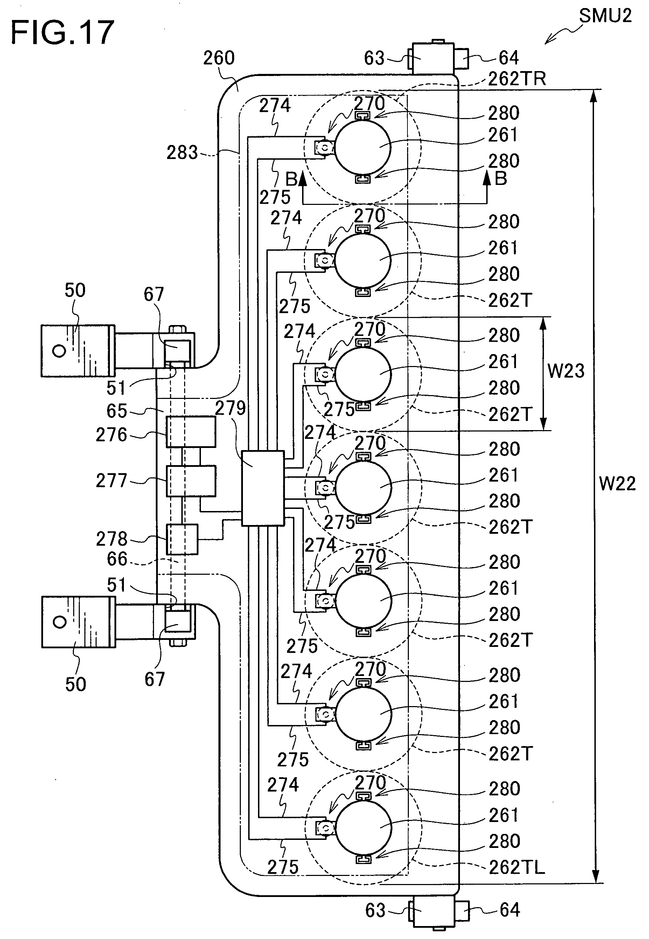

As illustrated in Figs. 16 and 17, the sub mower deck unit (second work unit) SMU2 is detachably attached to and supported by the pair of the support arms 50, 50. The sub mower deck unit SMU2 includes a sub mower deck 260, a plurality of sub mower motors (second work motors) 261, a plurality of sub mower blades (second working portions) 262, and so on. The sub mower blades 262 are disposed inside the sub mower deck 260 and rotationally driven by the sub mower motors 261 to mow a lawn.

The sub mower motor 261, a later-described pump motor, etc. are driven by power supplied from the battery 25. Note that the sub mower deck unit SMU2 may include a separate battery, and the sub mower motor 261, pump motor, etc. may be configured to be driven by power supplied from this battery.

Here, the mowing height of the lawn mowed by the sub mower blade 262 (length of the lawn after mowing) is different from the mowing height of the lawn mowed by the mower blades 45R, 45L included in the mower deck unit MU, same as the above-described example (SMU). The mowing height of the lawn mowed by sub mower blade 262 is shorter (the length of the lawn after mowing is shorter).

The sub mower deck 260 is substantially rectangular shaped having a long length in the lateral direction in a planar view same as the above-described example, and side surfaces of a rear portion of the sub mower deck 260 are opened. Further, the sub mower deck 260 includes the brackets 63, 63 and wheels 64, 64.

The sub mower deck 60 is rotatably supported by the rotary shaft 66 in the same manner as the above-described example. The both end portions of the rotary shaft 66 are respectively attached to the rear end portions of the pair of the support arms 50. Further, the rotary shaft 66 is fixed to the support arms 50 in a non-rotatable manner.

The sub mower deck unit SMU2 is attached to the electric lawn mower 10 by attaching the rotary shaft 66 to the pair of the support arms 50. However, the configuration of attaching the sub mower deck unit SMU to the electric lawn mower 10 is not limited to the above-described configuration. Further, same as the above-described example, any configuration in which the sub mower deck unit SMU2 can be detachably attached to the electric lawn mower 10 may be applied.

On an upper surface of the sub mower deck 260, the plurality of sub mower motors 261 is aligned in the lateral direction. An output shaft 268 in each of the sub mower motors 261 penetrates a through hole 269 provided on the upper surface of the sub mower deck 260. A sub mower blade 262 is fixed at a tip portion of the output shaft 268. Note that the neighboring sub mower blades 262 are adjacent to one another.

A cylinder 270 is disposed at a front portion of the sub mower motor 261. The cylinder 270 includes a piston 271 and a cylinder liner 272. More specifically, an upper end portion of the piston 271 having a piston head oriented downward is fixed to an outer peripheral surface of the front portion of the sub mower motor 261 via an attachment member 273. A lower end portion of the cylinder liner 272 is fixed to the upper surface of the sub mower deck 260, and the piston head can be inserted into the cylinder liner 272 from above. Flow paths 274, 275 such as piping configured to supply and discharge working fluid are connected to the cylinder liner 272. The flow path 274 is connected to the cylinder liner 272 below the piston head. The flow path 275 is connected to the cylinder liner 272 above the piston head.

Further, a pump 277 to be driven by a pump motor 276, and a tank 278 are disposed on the upper surface of the projecting portion 65 of the sub mower deck 260. The pump 277 supplies the working fluid of the tank 278 to the flow paths 274, 275 via a direction selector valve 279. Note that the direction selector valve 279 is also connected to the tank 278.

Further, slide mechanisms 280 are provided at both right and left end portions of the sub mower motor 261. The slide mechanism 280 includes a slide rail 281 and a slide rail receiver 282. More specifically, the slide rails 281 are fixed to outer peripheral surfaces of the both right and left side portions of the sub mower motor 261 in a manner extending upward. On the upper surface of the sub mower deck 260, a lower end portion of the slide rail receiver 282 fitted with the slide rail 281 and enabling the slide rail 281 to perform vertical slide is fixed.

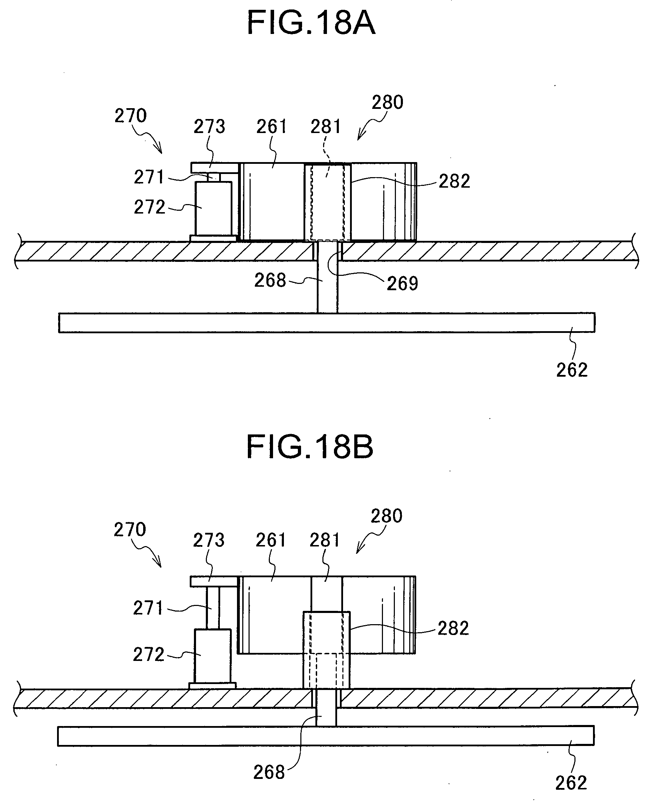

As illustrated in Figs. 18A and 18B, the sub mower motor 261 and the sub mower blade 262 can be integrally moved in the vertical direction by using the above-described configuration of the cylinder 270 and the slide mechanism 280. To integrally move the sub mower motor 261 and the sub mower blade 262, the working fluid is injected from the flow path 274 to a lower side of the piston head of the cylinder liner 272 by the direction selector valve 279. The piston 271 is pushed up by the injected working fluid. Therefore, the sub mower motor 261 and the sub mower blade 262 are integrally moved upward. Here, the working fluid above the piston head in the cylinder liner 272 is discharged from the flow path 275.

On the other hand, in order to integrally move the sub mower motor 261 and the sub mower blade 262 downward, the working fluid is injected to above the piston head of the cylinder liner 272 from the flow path 275 by the direction selector valve 279. The piston 271 is pushed down by the injected working fluid. Therefore, the sub mower motor 261 and the sub mower blade 262 are integrally moved downward. Here, the working fluid above the piston head of the cylinder liner 272 is discharged from the flow path 274.

Here, in Fig. 17, reference signs 262T indicate rotational loci of the respective sub mower blades 262. A reference sign 262TR indicates a rotational locus of the tip of the sub mower blade 262 disposed at the right-side end portion. A reference sign 262TL indicates a rotational locus of the tip of the sub mower blade 262 disposed at the left-side end portion.

Further, a vertical moving unit capable of integrally moving the sub mower motor 261 and the sub mower blade 262 in the vertical direction and including the cylinder 270, pump motor 276, pump 277, tank 278, direction selector valve 279, slide mechanism 280, etc., the sub mower motor 261, and so on are covered by a cover 283. With this configuration, clods, lawn, etc. can be prevented from being adhered or stuck to the vertical moving unit, and safety measures can be provided by avoiding malfunction occurrence, contact of a hand to respective member being operated, and so on.

Further, the configuration capable of integrally moving the sub mower motor 261 and the sub mower blade 262 in the vertical direction is not limited to the above-described configuration. The cylinder 270 may have a different configuration. For example, a configuration in which a relief valve and a filter may be suitably provided to the above-described configuration may be applied, too. Further, a configuration in which the sub mower motor 261 and the sub mower blade 262 can be integrally moved in the vertical direction by using a motor, a gear, etc. instead of the cylinder 270, pump motor 276, pump 277, tank 278, direction selector valve 279, etc. may be applied as well. Further, according to the above-described configuration, the seven sub mower motors 261 and the seven sub mower blades 262 are provided respectively, but the number and a size are not particularly limited.

Next, operation of the sub mower deck unit SMU2 in the law mowing work by the electric lawn mower 10 connected with the sub mower deck unit SMU2 on the rear side as described above will be described. First, the electric lawn mower 10 travels forward and mows the lawn by the mower deck unit MU at the mowing height H1 same as the above-described example. The area where the mower deck unit MU mows the lawn is the area having the lateral width W1 illustrated in Fig. 5A.

Next, the lawn having been mowed by the mower deck unit MU at the height H1 is mowed by the sub mower deck unit SMU2 attached on the rear side. Here, a mowing height H22 of the lawn mowed by the sub mower deck unit SMU2 is determined by a distance between the ground surface and the sub mower blade 262 included in the sub mower deck unit SMU2. With the above-described configuration, the lawn mowing height H2 can be changed by changing a setting position of the sub mower blade 262 in the vertical direction. Note that a configuration in which the lawn mowing height H2 can be changed by using the vertical moving unit capable of integrally moving the sub mower motor 261 and the sub mower blade 262 in the vertical direction may be applied as well.

The area where the lawn is mowed by the sub mower deck unit SMU2 at the height H22 is determined by forward movement of the electric lawn mower 10, a lateral arrangement position of each of the sub mower blades 262, and respective driving states thereof. As illustrated in Fig. 17, a maximum lateral width in which the sub mower deck unit SMU2 can mow the lawn at the height H22 is W22. The width W22 is a width between a right-side end portion of a rotational locus 262TR of the tip portion of the sub mower blade 262 disposed at the right-side end portion and a left-side end portion of a rotational locus 262TL of the tip portion of the sub mower blade 262 disposed at the left-side end portion. By mowing the lawn by using all of the sub mower blades 262, the lawn in the area of the width W22 can be mowed at the height H2. Here, the width W22 is almost same as the width W1.

On the other hand, a minimum lateral width in which the sub mower deck unit SMU2 can mow the lawn at the height H22 is a width W23. By mowing the lawn by using any one of the sub mower blades 262, the lawn in the area of the width W23 where the sub mower blade 262 is placed can be mowed at the height H22. At this point, other sub mower blades 262 are moved upward and made in a state not to contact the lawn. Here, the width W23 is same as the length of the sub mower blade 262.

Further, to make the sub mower deck unit SMU2 in the state not to mow the lawn, all of the sub mower blades 262 are moved upward so as not to contact the lawn. Therefore, the sub mower deck unit SMU2 does not mow the lawn. Note that lawn mowing can be prevented by stopping rotation of the sub mower motor 261, but the lawn may be bent down because the lawn contacts the sub mower blade 262. Therefore, preferably, lawn mowing is prevented by making the state that the lawn does not contact the sub mower blade 262.

The sub mower deck unit SMU2 selects an area to perform lawn mowing in accordance with forward movement and stop of the electric lawn mower 10 and the vertical movement of the respective sub mower blades 262, and achieves to mow the lawn in the area at the lawn height H22. Further, the sub mower deck unit SMU2 can be prevented from mowing the lawn.

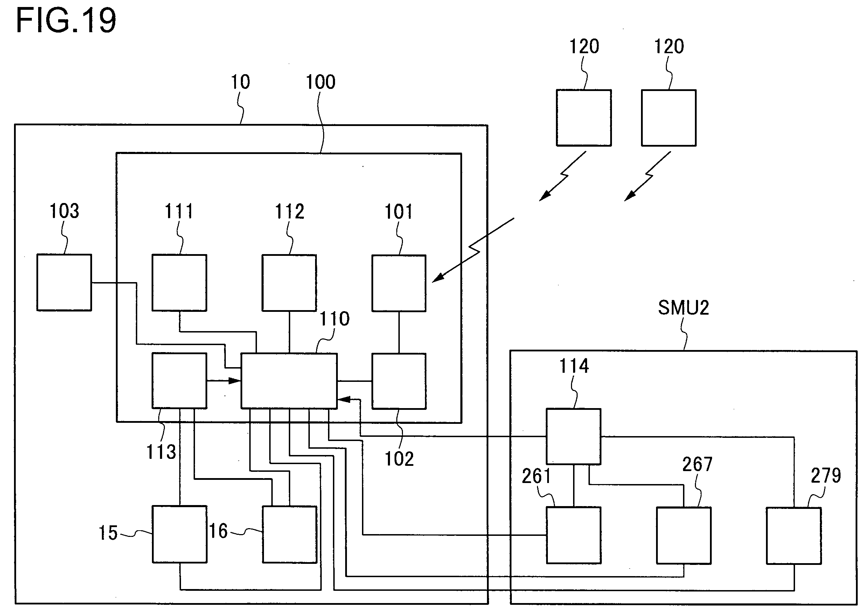

Next, lawn mowing work to create the detailed desired design such as an image and/or text with the gradation formed based on the differences in the lawn mowing height by considering the lawn as a canvas will be described. This lawn mowing work is executed in an unmanned state by the autonomous travel system using the plurality of GPS satellites as illustrated in Fig. 19. Note that other configurations and control except for the configuration and control of the sub mower deck unit SMU2 are same as the above-described example (Fig. 19).

The sub mower deck unit sensor 114 detects various kinds of information of the sub mower deck unit SMU2, such as operation states of the sub mower motor 261, pump motor 267, and direction selector valve 279 at the time of autonomous travel.

The control unit 110 is connected to the main body sensor 113, sub mower deck unit sensor 114, traveling motor 16, mower motor 15, sub mower motor 261, pump motor 276, direction selector valve 279, alarm unit 103, and so on. The traveling motor 16, mower motor 15, sub mower motor 261, pump motor 276, direction selector valve 279, alarm unit 103, etc. are operated under control of the control unit 110.

In the autonomous travel system having the above-described configuration, a radio signal sent from the GPS satellite 120 at a certain time is received by the GPS antenna 101 of the autonomous travel unit 100 included in the electric lawn mower 10, and transmitted to the control unit 110 via the GPS receiving unit 102.

The control unit 110 calculates the position of the autonomous travel unit 100 based on the radio signal information received at the GPS antenna 101 from the plurality of GPS satellites 120. The calculation is executed by the autonomous travel program stored in the control unit 110.

With this configuration, the position of the electric lawn mower 10 in the lawn mowing work area can be measured.

The sub mower deck unit sensor 114 is a general term for the sensors that detect necessary information for the sub mower deck unit SMU2 to execute lawn mowing, such as rotary speeds and rotational direction of the sub mower motor 261 and the pump motor 276 included in the sub mower deck unit SMU2, operation of the direction selector valve 279, and positions of the sub mower motors 261 and the sub mower blades 262 in the vertical direction. More specifically, a rotary speed sensor for the sub mower motor 261, a rotary speed sensor for the pump motor 276, a switch sensor to indicate the operational position of the direction selector valve 279, potentiometers for the sub mower motors 261 and the sub mower blades 262 in the vertical direction, etc. are the sub mower deck unit sensors. The detection signals from the sub mower deck unit sensors 114 are transmitted to the control unit 110.

Based on the positional information of the electric lawn mower 10 calculated based on the detection signals from the main body sensor 113 and the sub mower deck unit sensor 114 and the radio signals from the plurality of GPS satellites 120, rotation of the traveling motor 16, rotation of the mower motor 15, rotation of the sub mower motor 261, rotation of the pump motor 276, and operation of the direction selector valve 279 of the electric lawn mower 10 are controlled by the autonomous travel program stored in the control unit 110.

Further, same as the above-described example, the autonomous travel start button is pushed down to start the lawn mowing work of the electric lawn mower 10 by the autonomous travel.

Next, an example of the autonomous travel route and the work pattern in the lawn mowing work to create the detailed desired will be described. The autonomous travel route 130 of the electric lawn mower 10 includes a reciprocating linear travel route inside a work area as illustrated in Fig. 10.

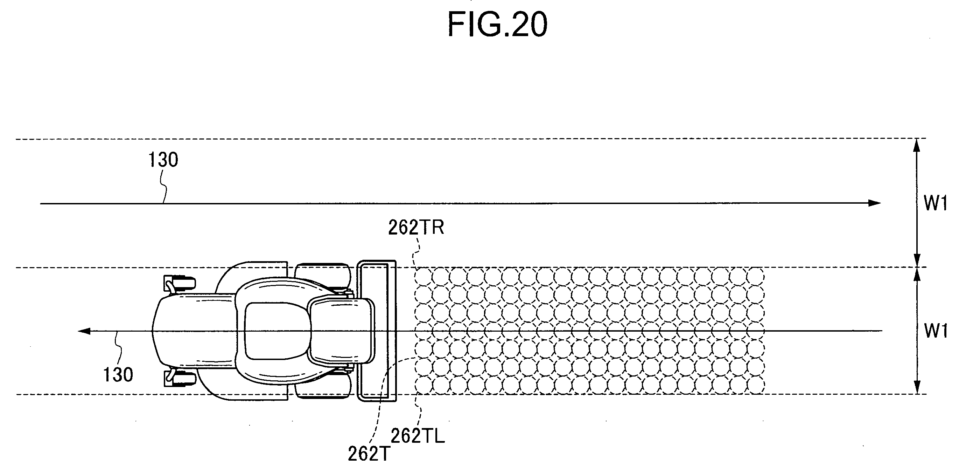

Further, as illustrated in Fig. 17, the plurality of sub mower blades 262 is aligned in the lateral direction, and the neighboring sub mower blades 262 are disposed adjacent to one another. Therefore, as illustrated in Fig. 20, the electric lawn mower 10 travels along the autonomous travel route 130 to mow the lawn by each of the sub mower blades 262, thereby achieving to mow the lawn of the entire area inside the work area by the sub mower deck unit SMU2.

Here, a place to be mowed by the sub mower deck unit SMU2 is specified so as to obtain the desired design, thereby achieving to create the desired design in detail. In the following, an example of specifying the place to be mowed by the sub mower deck unit SMU2 will be described in detail.

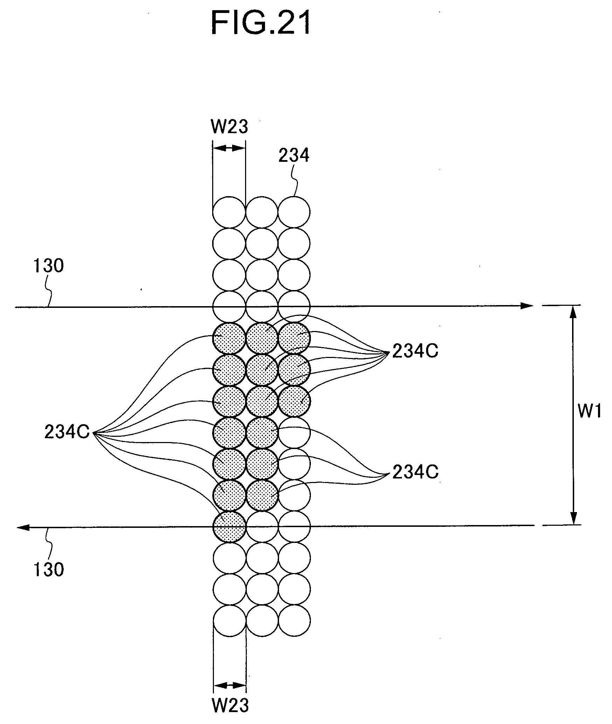

An area where the sub mower blades 262 mow the lawn (area where the lawn mowing height is H22) is specified to an area inside a virtual circle 234 selected from among areas inside a plurality of virtual circles 234 illustrated in Fig. 21. A diameter of the virtual circle 234 is same as the length of the sub mower blade 262 (width W23). The virtual circles 234 correspond to positions where the respective sub mower blades 262 aligned in the lateral direction pass when the electric lawn mower 10 travels along the autonomous travel route 130. Further, the virtual circles 234 neighboring relative to the travel direction of the electric lawn mower 10 are adjacent to one another. Therefore, the virtual circles 234 are arrayed at substantially same intervals in the entire area inside the work area.

Here, same as the above-described example, the above-described virtual circle 234 is considered as one dot, and the desired design which is an image formed of the two-dimensional array is adapted into the plurality of virtual circles 234 inside the work area. Note that one of two kinds of information included in the binarized image is adapted into the virtual circle 234. Therefore, based on the adapted information, whether the virtual circle 234 is a virtual circle 234C to be the lawn mowing area or not to be the lawn mowing area is specified. The sub mower deck unit SMU2 is operated such that the lawn inside the virtual circle 234C to be the lawn mowing area is mowed by the sub mower blade 262.

Operation of the sub mower deck unit SMU2 is determined by forward movement and stop of the electric lawn mower 10 and movement of each of the sub mower blades 262 in the vertical direction direction. The electric lawn mower 10 travels along the autonomous travel route 130. The traveling operation repeats operation including moving forward by a distance of the width W23 and stopping, moving forward by the distance of the width W23 and stopping. At this point, traveling is stopped at a position where the rotational locus 262T of the tip of each of the sub mower blades 262 matches the virtual circle 234.

At this point, each of the sub mower blades 262 is rotated by each of the sub mower motors 261. Further, each of the sub mower blades 262 is held while being lifted upward by each of the cylinders 270. Therefore, each of the sub mower blades 262 is in a state not to mow the lawn although being rotated.

Next, in the case where the electric lawn mower 10 stops and the rotational locus 262T of the tip of any one of the sub mower blades 262 is located at the position of the virtual circle 234C, the sub mower blade 62 is moved downward by the cylinder 70. Therefore, the lawn inside the area of the virtual circle 234C is mowed by the sub mower blade 262 moved downward. Then, the concerned sub mower blade 262 is moved upward by the cylinder 270. Again, the electric lawn mower 10 is made to travel forward by the distance of the width W23. By repeating this operation, the lawn inside the area of the virtual circle 234C inside the work area can be mowed by the sub mower deck unit SMU2 at the mowing height H22.

The electric lawn mower 10 executes the lawn mowing work by autonomous travel based on the above-described autonomous travel route 130 and work pattern (travel speed information of the electric lawn mower 10, operational information of the mower deck unit MU, and operational information of the sub mower deck unit SMU2). The lawn inside the work area can be mowed by the mower deck unit MU at the height H1, and further the lawn in the area of the virtual circle 234C can be mowed by the sub mower deck unit SMU2 at the height H22.

Therefore, the gradation is formed by providing the dots representing the lawn mowing height H22 inside the work area, and the desired design can be created inside the work area by using the two-dimensional array of the dots.

Note that the autonomous travel route 130 is a linear reciprocating route, namely, the simple route. The operational information of the sub mower deck unit SMU2 is also determined by the vertical movement of each of the sub mower blades 262 by the cylinder 270, which is a relatively simple configuration. Since the two-dimensional array can be adapted, adapting the desired design into the work area can be easily adapted.

Therefore, the design such as an image and/or text can be easily created with the gradation formed based on the differences in the lawn mowing height by considering the lawn as a canvas. Further, since the differences in the lawn mowing height are generated by the sub mower deck unit SMU2 capable of mowing the lawn in the area smaller than the case of the mower deck unit MU, the design such as an image and/or text can be created in detail.

Note that the autonomous travel route and work pattern (travel speed information of the electric lawn mower 10, operational information of the mower deck unit MU, and operational information of the sub mower deck unit SMU2) are not limited to the above-described configuration. The autonomous travel route is not limited to the linear reciprocating route but may be a route using a curved line. Further, the design created inside the work area is not limited to expression by the two-dimensional array of the dots.

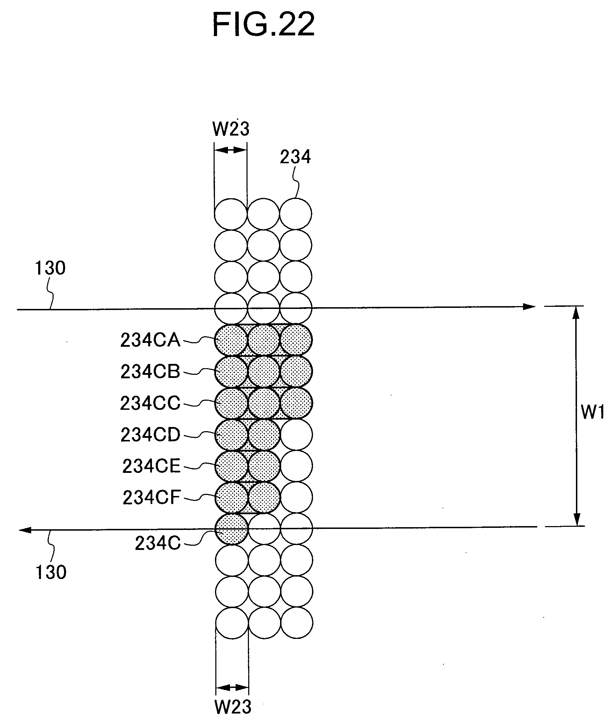

For example, as illustrated in Fig. 22, in the case where the adjacent virtual circles 234 continuously aligned in the travel direction of the electric lawn mower 10 are the lawn mowing areas, the lawn mowing areas may be set as 234CA, 234CB, 234CC, 234CD, 234CE, and 234CF to be mowed successively. In other words, the electric lawn mower 10 is made to travel linearly while mowing the lawn by the sub mower blades 262. With this configuration, the number of times that the sub mower blade 262 is vertically moved by the cylinder 270 can be reduced, and a period of the lawn mowing work can be shortened.

Further, in the case where a stop position of the electric lawn mower 10 does not match the virtual circles 234C to be the areas where all of the sub mower blades 262 mow the lawns, the electric lawn mower 10 may be configured to move forward to a next stop position (move forward by the distance of the width W3) without stopping. With this configuration, the number of times of stopping the electric lawn mower 10 can be reduced and the period of the lawn mowing work can be shortened.

Further, the sub mower blade 262 may be configured to be movable in the vertical direction to a plurality of heights. In other words, the lawn may be mowed by the sub mower deck unit SMU2 at the plurality of heights. With this configuration, the differences in the lawn mowing height can be increased and a range of the gradation is broadened. Therefore, more clearly creating the design such as an image and/or text becomes easy.

Further, the autonomous travel system is not limited to the above-described configuration, and may be the autonomous travel system same as the above-described example. Further, the lawn mowing work by the autonomous travel may be configured to perform mapping same as the above-described example.

Further, the configuration of the sub mower deck unit is not limited to the above-described configuration and may be a combined configuration of the sub mower deck unit SMU and the sub mower deck unit SMU2.

Further, the present invention is not limited to the above-described examples and may include various modes within the scope without departing from the gist of the invention.

### Industrial Applicability

The electric work vehicle according to the present invention is not limited to the vehicle executing lawn mowing work, and applicable to various electric work vehicles executing work to create a design such as an image and/or text by considering a work ground as a canvas; for example, work to create a design such as an image and/or text on a ground surface with ink or the like, work to draw an image and/or text on the ice of a skating rink, and so on.

### Reference Signs List

10 Electric lawn mower (Electric work vehicle)
13 Rear tire (drive wheel)
15 Mower motor (First work motor)
16 Traveling Motor
45 Mower Blade (First working portion)
61, 261 Sub mower motor (Second work motor)
62, 262 Sub mower blade (Second working portion) MU Mower unit (First work unit) SMU, SMU2 Sub mower deck unit (Second work unit)

## Claims

1. An electric work vehicle, comprising:
a pair of right and left drive wheels;
a pair of right and left traveling motors configured to drive the respective drive wheels; and
a first work unit including a first working portion to execute main work and a first work motor to drive the first working portion,
a second work unit including a second working portion to execute secondary work and a second work motor to drive the second working portion, and
a lateral moving unit being capable of integrally moving the second working portion and the second work motor in a lateral direction of the electric work vehicle.

2. The electric work vehicle according to claim 1, including a vertical moving unit capable of moving or rotating the second work unit in the vertical direction of the electric work vehicle.

3. The electric work vehicle according to claim 1, wherein the second work unit is detachably attached to the electric work vehicle.

4. The electric work vehicle according to claim 1, wherein the lateral moving unit includes: an endless body stretched in the lateral direction; a plurality of rotating bodies configured to wind the endless body; and a motor including an output shaft configured to fix one of the plurality of rotating bodies.

5. The electric work vehicle according to claim 1, using the first work unit to execute lawn mowing, wherein
the first working portion is a mower blade attached to the first work motor,
a mower deck configured to cover the mower blade is provided,
the second work unit is used for lawn mowing,
also the second working portion is a sub mower blade attached to the second work motor,
a sub mower deck configured to cover the sub mower blade is provided, and
the sub mower blade is smaller than the mower blade.

6. The electric work vehicle according to claim 1, capable of executing work by autonomous travel using a GPS satellite without an operator riding on the electric work vehicle.

7. An electric work vehicle, comprising:
a pair of right and left drive wheels;
a pair of right and left traveling motors configured to drive the respective drive wheels; and
a first work unit including a first working portion to execute main work and a first work motor to drive the first working portion, wherein
a second work unit includes a plurality of second working portions to execute secondary work and a plurality of second work motors to respectively drive the plurality of second working portions, and
the second working portions are disposed aligned in a lateral direction of the electric work vehicle.

8. The electric work vehicle according to claim 7, wherein the plurality of second working portions is disposed adjacent to one another.

9. The electric work vehicle according to claim 7, including a vertical moving unit capable of respectively moving the plurality of second working portions in the vertical direction of the electric work vehicle.

10. The electric work vehicle according to claim 7, wherein the second work unit is detachably attached to the electric work vehicle.

11. The electric work vehicle according to claim 7, configured to use the first work unit to execute lawn mowing, wherein
the first working portion is a mower blade attached to the first work motor,
a mower deck configured to cover the mower blade is provided,
the second work unit is used for lawn mowing,
also the second working portion is a sub mower blade attached to the second work motor,
a sub mower deck configured to cover the sub mower blade is provided, and
the sub mower blade is smaller than the mower blade.

12. The electric work vehicle according to claim 7, capable of executing work by autonomous travel using a GPS satellite without an operator riding on the electric work vehicle.
